# EUROPÄISCHE PATENTANMELDUNG

(11) **EP 4 372 652 A1**
(43) Veröffentlichungstag der Anmeldung: **22.05.2024**
(21) Anmeldenummer: 23207327.0
(22) Anmeldetag: 02.11.2023
(51) Int. Cl.: G06Q 20/14, G06Q 20/32, G06Q 20/38, G07F 9/00, G07F 13/02, G07F 15/00

(54) **VERFAHREN ZUM BETREIBEN EINES ENERGIEABGABESYSTEMS**

(30) Priorität: 16.11.2022 DE 102022130353
(71) Anmelder: Scheidt & Bachmann GmbH, 41238 Mönchengladbach (DE)
(72) Erfinder: Hiegemann, Verena, 50126 Bergheim (DE); Löffler, Stephan, 41468 Neuss (DE)
(74) Vertreter: Cohausz & Florack

(57) **Zusammenfassung**

Die Anmeldung betrifft ein Verfahren zum Betreiben eines Energieabgabesystems (100, 300) zum Abgeben von Energie an Fahrzeuge, wobei das Energieabgabesystem (100, 300) mindestens ein Hintergrundsystem (102, 302) und mindestens einen Abgabepunkt (120, 126, 142, 146, 346) umfasst, eingerichtet zum Abgeben von Energie an ein Fahrzeug, umfassend Empfangen, durch ein Kommunikationsmodul (104, 304) des Hintergrundsystems (102, 302), einer Tokenanfrage von einem mobilen Endgerät (162, 362), wobei die Tokenanfrage mindestens ein Abgabepunktdatum eines für einen Abgabevorgang bestimmten Abgabepunkts (120, 126, 142, 146, 346) des Energieabgabesystems (100, 300) enthält, Generieren, durch ein Generierungsmodul (106, 306) des Hintergrundsystems (102, 302), eines eindeutigen Tokens bei Empfang der Tokenanfrage, Bilden einer Verknüpfung, durch ein Verknüpfungsmodul (108, 308) des Hintergrundsystems (102, 302), zumindest zwischen dem Abgabepunktdatum und dem generierten eindeutigen Token, Speichern, durch ein Speichermodul (110, 310), der gebildeten Verknüpfung in einem Datenspeicher (112, 312) des Hintergrundsystems (102, 302), und Übertragen, durch das Kommunikationsmodul (104, 304), des generierten eindeutigen Tokens an das mobile Endgerät (162, 362), wobei der übertragene eindeutige Token auslesbar auf dem mobilen Endgerät (162, 362) speicherbar ist.

## Beschreibung

Die Anmeldung betrifft ein Verfahren zum Betreiben eines Energieabgabesystems zum Abgeben von Energie an Fahrzeuge, wobei das Energieabgabesystem mindestens ein Hintergrundsystem und mindestens einen Abgabepunkt umfasst. Darüber hinaus betrifft die Anmeldung ein Hintergrundsystem für ein Energieabgabesystem und ein Energieabgabesystem.

Energieabgabesysteme zur Abgabe von Energie, wie Kraftstoffabgabesysteme und/oder elektrische Ladesysteme, mit mindestens einem Abgabepunkt, wie einem Kraftstoffabgabepunkt und/oder einem Ladepunkt, zur Abgabe von Energie, wie Kraftstoff und/oder elektrische Energie, an ein Fahrzeug sind aus dem Stand der Technik bekannt.

Ein Beispiel eines derartigen Energieabgabesystems ist ein Tankstellensystem. Ein Tankstellensystem bzw. eine Tankstelle umfasst als Kraftstoffabgabepunkt mindestens einen Zapfpunkt, in der Regel eine Mehrzahl von Zapfpunkten, eingerichtet zum Abgeben von Kraftstoff, wie flüssigen Kraftstoff (z.B. Diesel, Benzin etc.) oder gasförmigen Kraftstoff (z.B. Erdgas, Wasserstoff). Alternativ oder zusätzlich kann ein Tankstellensystem auch mindestens einen Abgabepunkt in Form eines Ladepunkts, insbesondere eine Mehrzahl von Ladepunkten, eingerichtet zum Abgeben von elektrischer Energie umfassen. Das Abgeben von Energie erfolgt im Rahmen eines Abgabevorgangs, wie ein Ladevorgang und/oder Tankvorgang.

Bei einem solchen Energieabgabesystem kann allgemein ein für die Durchführung eines Abgabevorgangs zu entrichtendes Gelddatum bzw. zu entrichtender Betrag zu unterschiedlichen Zeitpunkten bezahlt bzw. entrichtet werden. Insbesondere kann das Gelddatum eines Abgabevorgangs von der abgegebenen Energiemenge bzw. einem abgegebenen Energiemengendatum und einem Tarifdatum abhängen.

Bei dem sogenannten Pre-payment erfolgt eine Bezahlung eines vorgegebenen Gelddatums bzw. Betrags oder eine Vorautorisierung eines erwartbaren und angemessenen Gelddatums bzw. Betrags vor dem Start des Abgabevorgangs. Erst nach einer derartigen Bezahlung kann der Abgabevorgang freigegeben bzw. gestartet werden, wobei über einen sogenannten Preset sichergestellt werden kann, dass der Abgabepunkt maximal den vorautorisierten Höchstbetrag abgibt.

Es besteht bei diesem Schema das Risiko, dass ein Nutzer einen falschen Abgabepunkt vorautorisiert. Im Fall der Vorautorisierung erfolgt nach abgeschlossenem Tank- bzw. Ladevorgang über einen sogenannten Financial Advice ein Anpassen des effektiven Zahlbetrages auf den tatsächlichen Wert des Tank- bzw. Ladevorgangs. Bei einer sogenannten "Null-Tankung" - bei der kein Kraftstoff bzw. kein Strom geflossen ist - wird der gesamte Vorautorisierungsbetrag storniert.

Bei dem sogenannten Post-payment erfolgt die Bezahlung des Gelddatums nach der Durchführung des Abgabevorgangs. Es besteht bei diesem Schema das Risiko, dass ein Nutzer sich ohne zu bezahlen von dem Abgabepunkt entfernt (ein solcher Nutzer kann auch als "Wegfahrer" bezeichnet werden). Ein weiteres Risiko ist, dass ein Nutzer einen anderen Abgabevorgang bezahlt als den eigenen (auch als "Säulentausch" bezeichnet, obwohl es Zapf- oder Ladepunkte sind, die vertauscht werden). Schließlich besteht beim Post-payment das Risiko der Zahlungsunfähigkeit des Nutzers.

In einem Energieabgabesystem kann auch ein sogenannter Mischbetrieb gefahren werden, bei dem Nutzer sowohl Pre-payment als auch Post-payment nutzen können. Hier ergeben sich weitere Risiken, die aus dieser Kombination entstehen. Diese ergeben sich im Wesentlichen durch Säulentausche mit unterschiedlichen Zahlverfahren und Autorisierungsstatus.

Ferner können bei bekannten Energieabgabesystemen verschiedene Bezahloptionen zur Verfügung stehen:
1. Bezahlanwendung (auch als Bezahlapp bezeichnet), die auf einem mobilen Endgerät des Nutzers installiert ist;
2. Bezahlterminal, das an einem Abgabepunkt, z.B. in der Nähe des Abgabepunktes, angeordnet ist;
3. Bezahlterminal, das in einem Gebäude des Energieabgabesystem angeordnet ist;
4. Kassenvorrichtung, die z.B. in einem Gebäude des Energieabgabesystems angeordnet ist.

Die Optionen 1 und 2 werden häufig bei Pre-payment/ Vorautorisierungsverfahren genutzt. Optionen 3 und 4 werden aufgrund der Entfernung zwischen einem Abgabepunkt und einer Kassenvorrichtung und/oder einem Bezahlterminal bevorzugt beim Post-Payment genutzt. Es soll insbesondere vermieden werden, dass Nutzer für eine Vorautorisierung einen langen Weg zu einer Zahlungsmöglichkeit und wieder zurückgehen müssen, bevor sie überhaupt ihren Tank- bzw. Ladevorgang starten können.

Bei den Optionen 3 und 4 erfolgt die Identifikation des zu bezahlenden Abgabevorgangs üblicherweise anhand der Abgabepunktnummer (auch als Säulennummer bezeichnet). Insbesondere im Falle eines Ladevorgangs ist jedoch ein Problem, dass sich ein Nutzer die Ladesäulennummer bzw. Ladepunktnummer über einen längeren Zeitraum, nämlich den gesamten Ladezeitraum, merken muss. Bereits bei einem im Vergleich zu einem Ladevorgang regelmäßig kürzeren Tankvorgang konventioneller Kraftstoffe ist zu beobachten, dass Nutzer oftmals die Zapfpunktnummer bzw. die Tanksäulennummer an der Kassenvorrichtung bereits vergessen haben. Es folgt dann entweder ein Blick aus dem Fenster des Gebäudes (insbesondere ein Shop) der Kassenvorrichtung auf den Forecourt oder der Geldbetrag, für den getankt wurde, hilft bei der Identifizierung der korrekten Zapfpunktnummer, da sich manche Nutzer den Geldbetrag besser merken können als die Zapfpunktnummer.

Da Ladesäulen häufig nicht auf dem Forecourt des Energieabgabesystems und somit nicht gut einsehbar sind und Nutzer üblicherweise nicht bis zum Abschluss des Ladevorgangs an der Ladesäule verweilen, fallen diese beiden Optionen in diesem Fall im Wesentlichen weg. In diesem Fall verbleibt nur die Möglichkeit, dass der Nutzer erneut zu der Ladesäule zurückkehrt, die Ladepunktnummer abliest und dann erneut zur Kassenvorrichtung läuft. Dies kann den Durchsatz an dem Ladepunkt reduzieren.

Im Rahmen des Aufenthaltes in bzw. an dem Energieabgabesystem können Nutzer weitere zahlungspflichtige Vorgänge bzw. Produkte und/oder Dienstleistungen (z.B. Speisen und Getränke, Toilettennutzung, Produkte aus dem Tankstellenshop, Autowäschen etc.) in Anspruch nehmen.

Bei einem Tankvorgang von konventionellem Kraftstoff führen Nutzer häufig im Anschluss an den abgeschlossenen Tankvorgang weitere Vorgänge durch. Insbesondere können Nutzer weitere von dem Energieabgabesystem angebotene Vorgänge bzw. Produkte und/oder Dienstleistungen (z.B. eines Shops) erwerben. Das mindestens eine weitere für den weiteren Vorgang zu entrichtende Gelddatum wird meist gemeinsam mit dem für den Tankvorgang zu entrichtenden Gelddatum an einer Kassenvorrichtung bezahlt (Post-payment). Im Falle von Pre-payment müssen weitere Vorgänge bzw. Waren und/oder Dienstleistungen getrennt von dem Tankvorgang bezahlt werden.

Bei längeren Aufenthalten an bzw. in einem Energieabgabesystem wird in der Regel das Fahrzeug nach dem Abgabevorgang umgeparkt und der Abgabevorgang bezahlt (alternativ auch in umgekehrter Reihenfolge, jedoch immer zeitnah), damit der Abgabepunkt physisch und systemseitig für nachfolgende Nutzer freigegeben wird. Es ist unüblich den Abgabevorgang über eine längere Zeit nach Beendigung des Abgabevorgangs unbezahlt zu lassen.

Während eines Ladevorgangs haben Nutzer aufgrund der längeren Ladedauer beim elektrischen Laden im Vergleich zum konventionellen Kraftstofftanken noch mehr Zeit, weitere Vorgänge durchzuführen, wie andere Produkte zu erwerben oder Dienstleistungen in Anspruch zu nehmen. Erfolgt die Durchführung des weiteren Vorgangs während der Ladevorgang noch andauert, muss ein für diesen Vorgang zu entrichtendes Gelddatum getrennt bezahlt werden. Nur im Falle eines Abschluss des weiteren Vorgangs zeitgleich mit dem Bezahlen des Ladevorgangs (Post-payment) können Ladevorgang und der mindestens eine weitere Vorgang gemeinsam bezahlt werden.

Dies führt insbesondere bei Ladevorgängen zu einer Vielzahl an Zahlvorgängen pro Nutzer, und damit zu einer reduzierten Nutzungsfreundlichkeit. Zudem macht es das aktuelle Vorgehen unattraktiv für Nutzer nach Ende des Tankvorgangs noch weitere/ länger dauernde Vorgänge zu tätigen (Anstellen --> Bezahlen --> Umparken --> nochmal in den Shop gehen --> nochmal anstellen --> nochmal bezahlen oder Gastronomieangebote in Anspruch nehmen).

Wie beschrieben, hat ein Energieabgabesystem eine Mehrzahl an Nachteilen. Insbesondere ist bei den bekannten Energieabgabesystemen die Nutzungsfreundlichkeit reduziert, aber auch die Sicherheit und der Durchsatz an einem Abgabepunkt. So kommt es immer wieder zu falsch bezahlten Abgabevorgängen oder zu nicht bezahlten Abgabevorgängen oder zu verzögert bezahlten Abgabevorgängen und damit zu verzögert freigegebenen Abgabepunkten.

Daher liegt der Anmeldung die Aufgabe zugrunde, ein Verfahren zum Betreiben eines Energieabgabesystems zum Abgeben von Energie an Fahrzeuge bereitzustellen, welches die Nachteile des Stands der Technik zumindest reduziert und insbesondere die Nutzungsfreundlichkeit sowie die Sicherheit und den Durchsatz verbessert.

Die Aufgabe wird gemäß einem ersten Aspekt der Anmeldung gelöst durch ein Verfahren gemäß Anspruch 1 zum Betreiben eines Energieabgabesystems zum Abgeben von Energie an Fahrzeuge. Das Energieabgabesystem umfasst mindestens ein Hintergrundsystem und mindestens einen Abgabepunkt. Der mindestens eine Abgabepunkt ist eingerichtet zum Abgeben von Energie an ein Fahrzeug. Das Verfahren umfasst:
- Empfangen, durch ein Kommunikationsmodul des Hintergrundsystems, einer Tokenanfrage von einem mobilen Endgerät,
- wobei die Tokenanfrage mindestens ein Abgabepunktdatum eines für einen Abgabevorgang bestimmten Abgabepunkts des Energieabgabesystems enthält,
- Generieren, durch ein Generierungsmodul des Hintergrundsystems, eines eindeutigen Tokens bei einem Empfang der Tokenanfrage,
- Bilden einer Verknüpfung, durch ein Verknüpfungsmodul des Hintergrundsystems, zumindest zwischen dem Abgabepunktdatum und dem generierten eindeutigen Token,
- Speichern, durch ein Speichermodul, der gebildeten Verknüpfung in einem Datenspeicher des Hintergrundsystems, und
- Übertragen, durch das Kommunikationsmodul, des generierten eindeutigen Tokens an das mobile Endgerät,
- wobei der übertragene eindeutige Token auslesbar auf dem mobilen Endgerät speicherbar ist.

Indem anmeldungsgemäß im Gegensatz zum Stand der Technik für einen Abgabevorgang, insbesondere für jeden Abgabevorgang, ein eindeutiger Token generiert wird, dieser eindeutige Token mit dem Abgabevorgang verknüpft wird und der eindeutige Token an ein mobiles Endgerät des Nutzers derart übertragen wird, dass dieser von dem mobilen Endgerät durch ein Lesemodul des Energieabgabesystems auslesbar ist, ist ein Abgabevorgang (bzw. der Abgabepunkt, an dem der Abgabevorgang ausgeführt wird) eindeutig anhand des generierten Tokens durch den Nutzer identifizierbar. Die Nachteile des Stands der Technik werden zumindest reduziert. Insbesondere werden die Nutzungsfreundlichkeit sowie die Sicherheit und der Durchsatz verbessert.

Durch die eindeutige Identifizierbarkeit eines Abgabevorgangs anhand des generierten Tokens sowie der gespeicherten Verknüpfung kann sichergestellt werden, dass Nutzer keinen anderen Abgabevorgang bezahlen und den Abgabevorgang auch dann identifizieren können, wenn ihnen die Abgabenummer entfallen ist.

Das anmeldungsgemäße Verfahren dient dem Betreiben eines Energieabgabesystems. Vorzugsweise kann das Energieabgabesystem ein Tankstellensystem bzw. eine Tankstelle sein. Das Energieabgabesystem ist eingerichtet zum Abgeben von Energie an Fahrzeuge, insbesondere Landfahrzeuge. Die Energie kann in verschiedenen Formen abgegeben werden. Zum Abgeben von Energie umfasst ein Energieabgabesystem mindestens einen (Energie-) Abgabepunkt, bevorzugt eine Mehrzahl von (Energie-) Abgabepunkten.

Vorzugsweise kann ein Energieabgabesystem mindestens eine Abgabesäule mit einem oder mehreren Abgabepunkt/en umfassen. Beispielsweise kann die mindestens eine Abgabesäule eine Zapfsäule mit einem oder mehreren Zapfpunkt/en und/oder eine Ladesäule mit einem oder mehreren Ladepunkt/en sein. Vorzugsweise kann das Energieabgabesystem eine Mehrzahl von Zapfsäulen und eine Mehrzahl von Ladesäulen umfassen.

Unter einem Abgabepunkt ist vorliegend insbesondere eine Benutzerschnittstelle des Energieabgabesystems (insbesondere einer Abgabesäule) zu verstehen, mit der ein Fahrzeug durch das Energieabgabesystem mit Energie versorgt werden kann. Insbesondere kann an einem Abgabepunkt ein Abgabevorgang ausgeführt werden, um Energie von dem Energieabgabesystem an das Fahrzeug zu übertragen.

Ein Abgabepunkt in Form eines Zapfpunkts ist insbesondere eingerichtet zum Abgeben von Energie in Form von Kraftstoff, wie flüssigen Kraftstoff (z.B. Diesel, Benzin etc.) oder gasförmigen Kraftstoff (z.B. Erdgas, Wasserstoff). Beispielsweise kann eine Zapfsäule (bekannter Bauart) so aufgebaut sein, dass sie an zwei (gegenüberliegenden) Seiten jeweils einen Abstellbereich in Form von Abstellplätzen für zu tankende Fahrzeuge hat. Ferner kann eine derartige Zapfsäule beispielsweise an beiden Seiten als Abgabepunkt jeweils mindestens eine Ausgabevorrichtung (z.B. Schlauch mit Zapfpistole) für Kraftstoffe aufweisen. Bei Varianten kann jeder Abgabepunkt eine Mehrzahl von Ausgabevorrichtungen für eine entsprechende Mehrzahl von unterschiedlichen Kraftstoffen aufweisen. Mit anderen Worten verfügt eine beispielhafte Zapfsäule über vorzugsweise zwei Zapfpunkte, nämlich je einen Zapfpunkt für je einen Abstellplatz bzw. Abstellbereich.

Ein Abgabepunkt in Form eines Ladepunkts ist insbesondere eingerichtet zum Abgeben von Energie in Form von elektrischer Energie. Insbesondere kann ein Stromfluss von dem Ladepunkt zu einem Fahrzeug ermöglicht werden. Eine Ladesäule kann beispielsweise zwei oder mehr Ladepunkte aufweisen. Jeder Ladepunkt kann jeweils einen Abstellbereich in Form von Abstellplätzen für zu ladende Fahrzeuge umfassen, insbesondere in Form von Elektrofahrzeugen. Ein Elektrofahrzeug kann über einen aufladbaren elektrischen Speicher insbesondere in Form einer Traktionsbatterie verfügen. Eine Ladesäule bzw. Ladestation kann als Ladepunkt eine Ausgabevorrichtung aufweisen, wie eine Ladesteckdose (z.B. gemäß EN 62196 Typ 2 oder dergleichen) und/oder ein festangeschlagenes Ladekabel mit einem Ladestecker (z.B. gemäß EN 62196 Typ 2 oder dergleichen).

Ferner weist das anmeldungsgemäße Energieabgabesystem ein Hintergrundsystem auf. Das Hintergrundsystem ist insbesondere entfernt von dem mindestens einen Abgabepunkt angeordnet. Ein Hintergrundsystem (auch als Backendsystem bezeichnet) kann von einer oder mehreren (verteilt angeordneten) Rechenvorrichtung/en gebildet sein, beispielsweise in Form von einem oder mehreren Server/n. Beispielsweise kann das Hintergrundsystem durch ein Cloudsystem gebildet sein.

Das anmeldungsgemäße Hintergrundsystem umfasst eine Mehrzahl von Modulen. So umfasst das Hintergrundsystem zumindest ein Kommunikationsmodul, ein Generierungsmodul, ein Verknüpfungsmodul, ein Speichermodul sowie einen Datenspeicher. Das Kommunikationsmodul umfasst vorzugsweise eine Mehrzahl von Kommunikationselementen, die auf verschiedenen (drahtgebundenen und/oder drahtlosen) Kommunikationstechnologien basieren.

Gemäß dem anmeldungsgemäßen Verfahren erfolgt ein Empfangen, durch das Kommunikationsmodul des Hintergrundsystems, einer Tokenanfrage von einem mobilen Endgerät. Eine Tokenanfrage enthält insbesondere eine Anfrage bzw. Aufforderung zum Generieren eines eindeutigen Tokens für einen auszuführenden Abgabevorgang oder einem (augenblicklich) ausgeführten Abgabevorgang an einem bestimmten Abgabepunkt. Insbesondere wird eine Tokenanfrage von einem mobilen Endgerät eines Nutzers ausgesendet, dessen Fahrzeug mit Energie durch den bestimmten Abgabepunkt versorgt wird oder versorgt werden soll.

Beispielhafte und nicht abschließende mobile Endgeräte sind Smartphones, Tablet-Computer, mobile Spielkonsolen, Laptops, Netbooks, Datenbrillen, Smart-Watches und ähnliche Wearables. Alternativ kann ein mobiles Endgerät ein dediziertes Energieabgabe-Gerät sein, das ausschließlich für eine Energieabgabeanwendung ausgelegt ist.

Die Tokenanfrage enthält mindestens ein Abgabepunktdatum eines für einen Abgabevorgang bestimmten Abgabepunkts des Energieabgabesystems. Ein Abgabepunktdatum ist insbesondere eine Angabe (z.B. eine Zeichenkette) zum eindeutigen Identifizieren eines Abgabevorgangs und/oder eines Abgabepunkts. Es versteht sich, dass eine Tokenanfrage weitere Daten enthalten kann, wie Zeitpunkt der Versendung der Tokenanfrage, Adressdaten des aussendenden mobilen Endgeräts etc.

Bei einem Empfang einer Tokenanfrage generiert das Generierungsmodul einen eindeutigen Token (zumindest dann, wenn keine Gründe vorliegen, die gegen eine Generierung sprechen, wie noch erläutert werden wird). Eindeutig meint insbesondere, dass der generierte Token systemweit nur einmal vorhanden ist. Der generierte Token ist vorzugsweise ein eindeutiger digitaler Token.

Der generierte eindeutige Token wird mit einem Abgabevorgang bzw. Abgabepunkt, an dem der Abgabevorgang ausgeführt wird, anhand des Abgabepunktdatums verknüpft. Mit anderen Worten, der Abgabevorgang bzw. der Abgabepunkt und der generierte Token sind einander in eindeutiger Weise durch die gebildete Verknüpfung zugeordnet.

Die gebildete Verknüpfung, vorzugsweise jede gebildete Verknüpfung, wird in einem Datenspeicher des Hintergrundsystems durch ein Speichermodul gespeichert. Hierbei zeichnet sich die Verknüpfung dadurch aus, dass der Verknüpfung, insbesondere auch zu einem späteren Zeitpunkt, anhand des eindeutigen Tokens der Verknüpfung und/oder anhand des Abgabepunktdatums weitere Daten hinzugefügt werden können.

Nach einer Generierung des Tokens und insbesondere nach einer Speicherung einer entsprechenden Verknüpfung erfolgt ein Übertragen, durch das Kommunikationsmodul, des generierten eindeutigen (digitalen) Tokens an das mobile Endgerät, das die Tokenanfrage ausgesendet hat, die die Generierung des Tokens bewirkt hat. Beispielsweise kann die Aussendung durch das Kommunikationsmodul anhand der Adressdaten des aussendenden mobilen Endgeräts erfolgen.

Der generierte und ausgesendete (digitale) Token zeichnet sich dadurch aus, dass er von dem empfangenen mobilen Endgerät auslesbar in einem Datenspeicher des mobilen Endgeräts gespeichert werden kann. Der generierte Token enthält insbesondere Instruktionen, die, wenn sie durch einen Prozessor des mobilen Endgeräts ausgeführt werden, das mobile Endgerät veranlassen, den empfangenen Token derart zu speichern, dass dieser zumindest von einem weiteren Lesemodul (des Energieabgabesystems) auslesbar ist.

Gemäß einer Ausführungsform des anmeldungsgemäßen Verfahrens kann das mindestens eine Abgabepunktdatum eine Abgabepunktkennung des (für den Abgabevorgang bestimmten) Abgabepunkts und/oder eine Abgabevorgangskennung des (an dem bestimmten Abgabepunkt auszuführenden oder ausgeführten) Abgabevorgangs sein. Vorzugsweise kann das Abgabepunktdatum eine systemweit eindeutige Abgabepunktkennung des Abgabepunkts sein. Mit der Abgabepunktkennung kann der Abgabepunkt, an dem der Abgabevorgang durchgeführt wird oder durchgeführt werden soll, eindeutig identifizierbar sein.

Alternativ (oder auch zusätzlich) kann das mindestens eine Abgabepunktdatum eine Abgabevorgangskennung sein, mit der ein Abgabevorgang eindeutig identifizierbar ist.

Gemäß einer weiteren Ausführungsform des anmeldungsgemäßen Verfahrens kann der generierte eindeutige Token mindestens ein Zeitdatum enthalten. Das Zeitdatum kann insbesondere ein Ablaufzeitdatum der Gültigkeit des Tokens sein. Insbesondere kann hierdurch sichergestellt werden, dass ein generierter Token nur eine bestimmte (vorgebbare) Gültigkeitszeitdauer (z.B. zwischen 1 h und 24 h) besitzt. Insbesondere zusätzlich kann der generierte eindeutige Token einen Zeitstempel enthalten, insbesondere eine Datums- und Uhrzeitangabe. Der Zeitstempel kann den Generierungszeitpunkt repräsentieren.

Vorzugsweise kann das mobile Endgerät, insbesondere unter Steuerung einer auf dem mobilen Endgerät installierten Energieabgabeanwendung, eingerichtet sein zum Speichern des übertragenen eindeutigen Tokens und insbesondere zum Bereitstellen des gespeicherten eindeutigen Tokens, derart, dass der Token von einem Lesemodul des Energieabgabesystems auslesbar ist.

Gemäß einer besonders bevorzugten Ausführungsform des anmeldungsgemäßen Verfahrens kann der eindeutige Token aus dem mobilen Endgerät in wenigstens einem der folgenden Formate auslesbar sein:
- als NFC-basierter Token,
- als QR-Code-basierter Token,
- als Barcode-basierter Token, oder
- als Bluetooth-basierter Token.

Ein derartiger Token kann als Dateninhalt insbesondere einen eindeutigen digitalen Code (z.B. eine eindeutige Zeichenkette) umfassen. Ein QR-Code-basierter Token oder ein Barcode-basierter Token kann beispielsweise in dem mobilen Endgerät derart gespeichert sein, dass er auf einem Bildschirm des mobilen Endgeräts für ein Auslesen des Tokens angezeigt werden kann. Beispielsweise kann ein Anzeigen auf einem Bildschirm des mobilen Endgeräts bei einer Detektion einer bestimmten Nutzeraktion bewirkt werden.

Bei weiteren Varianten der Anmeldung kann der digitale Token über eine NFC-Schnittstelle des mobilen Endgeräts oder über eine Bluetooth-Schnittstelle des mobilen Endgeräts auslesbar sein. Insbesondere kann bei derartigen Token der eindeutige Dateninhalt bzw. Code durch ein entsprechendes Lesemodul des Energieabgabesystems über ein entsprechendes Schnittstellenmodul des mobilen Endgeräts auslesbar sein.

Gemäß einer besonders bevorzugten Ausführungsform des anmeldungsgemäßen Verfahrens kann das Verfahren ferner umfassen
- Empfangen, durch das Kommunikationsmodul, des durch ein entfernt von dem Hintergrundsystem angeordnetes Lesemodul des Energieabgabesystems aus dem mobilen Endgerät ausgelesenen eindeutigen Tokens und mindestens ein Vorgangsdatums eines weiteren Vorgangs von dem Lesemodul, und
- Hinzufügen, durch ein Ergänzungsmodul des Hintergrundsystems, des weiteren Vorgangsdatums zu der gespeicherten Verknüpfung, basierend auf dem empfangenen eindeutigen Token, dem gespeicherten eindeutigen Token und dem empfangenen Vorgangsdatum.

Das Vorgangsdatum kann insbesondere ein für den mindestens einen ausgeführten weiteren Vorgang (z.B. Erwerb von Speisen und Getränken, Toilettennutzung, Erwerb von Produkten aus dem Tankstellenshop, Fahrzeugwäsche etc.) zu entrichtendes Gelddatum sein bzw. umfassen. Insbesondere können eine Mehrzahl von Gelddaten für eine entsprechende Anzahl an ausgeführten Vorgängen, beispielsweise Kaufvorgängen, der Verknüpfung anhand des eindeutigen Tokens hinzugefügt werden.

Insbesondere kann bei einem weiteren durchgeführten Vorgang anstelle einer unmittelbaren Bezahlung des zu entrichtenden Geldbetrags der auf dem mobilen Endgerät gespeicherte Token durch ein Lesemodul des Energieabgabesystems ausgelesen werden. Beispielsweise nach einer Nutzerbestätigung, aber auch ohne eine Nutzerbestätigung, kann das Lesemodul den ausgelesenen Token zusammen mit dem mindestens einen Vorgangsdatum (z.B. mindestens ein Gelddatum bzw. ein Geldbetrag) an das Hintergrundsystem übertragen. Insbesondere kann das mindestens eine Lesemodul kommunikativ mit dem Kommunikationsmodul über ein (drahtloses und/oder drahtgebundenes) Netzwerk verbunden sein.

Wenn das Kommunikationsmodul einen ausgelesenen Token zusammen mit mindestens einem Vorgangsdatum empfängt, kann das Ergänzungsmodul des Hintergrundsystems in dem Datenspeicher nach einer Verknüpfung mit einem gespeicherten Token suchen, der zu dem empfangenen Token korrespondiert, insbesondere identisch ist. Wenn eine Verknüpfung mit einem gespeicherten Token identifiziert wird, der dem empfangenen Token entspricht, kann das Ergänzungsmodul das mindestens eine empfangene Vorgangsdatum der Verknüpfung hinzufügen. Insbesondere kann die Verknüpfung einen virtuellen Warenkorb darstellen, in den ein Nutzer alle Vorgänge bzw. entsprechend zu entrichtende Gelddaten sammeln kann, um diese gesammelt in einem einzelnen Bezahlvorgang dann bezahlen zu können. Die Nutzbarkeit des Energieabgabesystems kann weiter verbessert werden.

Gemäß einer weiteren bevorzugten Ausführungsform des anmeldungsgemäßen Verfahrens kann das Verfahren ferner umfassen:
- Bereitstellen, durch ein an dem Abgabepunkt angeordnetes Initialisierungsmodul des Energieabgabesystems, eines Initialisierungsdatensatzes, enthaltend zumindest das mindestens eine Abgabepunktdatum des Abgabepunkts, an dem das Initialisierungsmodul angeordnet ist, und insbesondere ein Kommunikationsdatum zum Ermöglichen eines Übertragens der Tokenanfrage an das Kommunikationsmodul.

Insbesondere kann das Initialisierungsmodul das mindestens eine Abgabepunktdatum derart bereitstellen, dass dieses von einem mobilen Endgerät (drahtlos) erfassbar ist. Indem an dem Abgabepunkt ein Initialisierungsmodul angeordnet ist, das diesem Abgabepunkt eindeutig zugeordnet ist und das eingerichtet ist zum Bereitstellen des mindestens einen Abgabepunktdatums von diesem Abgabepunkt, kann der Abgabepunkt, an dem ein Abgabevorgang ausgeführt wird oder ausgeführt werden soll, sicher identifiziert werden. Insbesondere kann das Initialisierungsmodul benachbart zu der mindestens einen Ausgabevorrichtung des jeweiligen Abgabepunkts angeordnet sein.

Das mobile Endgerät kann eingerichtet sein zum Erhalten des Initialisierungsdatensatzes. Insbesondere kann das mobile Endgerät zum Übertragen einer Tokenanfrage an das Kommunikationsmodul eingerichtet sein, basierend auf dem Kommunikationsdatum des Initialisierungsdatensatzes und/oder eines in dem mobilen Endgerät gespeicherten Kommunikationsdatums. Insbesondere kann dies von einer auf dem mobilen Endgerät installierten Energieabgabeanwendung gesteuert werden.

Das mindestens eine Kommunikationsdatum kann eine Kommunikationsadresse des Kommunikationsmoduls bzw. des Hintergrundsystems sein. In diesem Fall kann die Tokenanfrage in Form einer Nachricht über ein (drahtloses und/oder drahtgebundenes) Netzwerk übertragen werden.

Bei einer bevorzugten Ausführungsform kann das mindestens eine Kommunikationsdatum eine Webseitenadresse sein. Insbesondere kann der Initialisierungsdatensatz Instruktionen umfassen, die, wenn sie durch einen Prozessor des mobilen Endgeräts ausgeführt werden, das mobile Endgerät veranlassen, die von dem Hintergrundsystem bereitgestellte Webseite entsprechend der Webseitenadresse aufzurufen. Mit anderen Worten, kann der Empfang des Initialisierungsdatensatzes das mobile Endgerät dazu veranlassen, eine bestimmte Webseite aufzurufen. Über eine Nutzerschnittstelle des mobilen Endgeräts kann der Nutzer die Generierung eines Tokens durch eine Nutzeraktion anfordern. Das Empfangen der Tokenanfrage umfasst insbesondere die Detektion einer entsprechenden Nutzeraktion bzw. - aufforderung durch das Kommunikationsmodul. Das mindestens eine Abgabepunktdatum kann in diesem Fall automatisch bei einem Aufrufen der von dem Hintergrundsystem bereitgestellten Webseite an das Hintergrundsystem übertragen werden.

Das Initialisierungsmodul kann ein aktives Initialisierungsmodul sein, insbesondere ein Bluetooth-Beacon. Unter einem aktiven Initialisierungsmodul ist insbesondere ein Initialisierungsmodul zu verstehen, dass zumindest nahezu kontinuierlich ein Signal (aktiv, also insbesondere ohne eine Anregung durch ein mobiles Endgerät) aussendet, insbesondere enthaltend den Initialisierungsdatensatz. Das aktive Initialisierungsmodul kann eingerichtet sein zum Aussenden eines Advertising-Signals, enthaltend (als Dateninhalt) den Initialisierungsdatensatz.

Unter einem (Nahfeld-)Advertising-Signal ist vorliegend insbesondere ein (Nahfeld-)Signal zu verstehen, das von einem Sender des Initialisierungsmodul ausgesendet werden kann und das von einem mobilen Endgerät empfangbar und insbesondere auswertbar ist, ohne dass eine (dauerhafte) Kopplung zwischen den genannten Geräten erforderlich ist. Insbesondere kann es auf mindestens einem von beispielsweise einer Mehrzahl von Advertising-Kanälen einer bestimmten Übertragungstechnologie ein Advertising-Signal, vorzugsweise in regelmäßigen Zeitabständen, ausgesendet werden.

Im Stand der Technik wird ein Advertising-Signal eingesetzt, um eine dauerhafte Kommunikationsverbindung zwischen zwei Geräten herzustellen. Insbesondere wird ein Advertising-Signal für den ersten Kontakt zwischen den Geräten verwendet, insbesondere um die Anwesenheit und die grundsätzliche Bereitschaft eines Geräts für eine Kopplung mit einem weiteren (evtl. in Reichweite befindlichem) Gerät anzuzeigen. Nach Herstellung des ersten Kontakts wird anschließend auf einen anderen Kanal mit einer höheren Datenrate gewechselt, wenn eine dauerhafte Kommunikationsverbindung gewünscht ist. Die Daten werden dann nicht über Advertising-Signale ausgetauscht.

Es ist erkannt worden, dass ein Advertising-Signal vorteilhaft zur Signalisierung zumindest eines Initialisierungsdatensatzes verwendet werden kann, da (sofern die entsprechende Nahfeldschnittstelle des mobilen Endgeräts aktiviert ist) ein solches Signal stets von einem mobilen Endgerät empfangbar und auswertbar ist.

Gemäß einer besonders bevorzugten Ausführungsform des anmeldungsgemäßen Verfahrens kann das Initialisierungsmodul ein passives Initialisierungsmodul sein. Insbesondere kann das passive Initialisierungsmodul ein NFC-Modul und/oder ein graphischer Code sein (vorzugsweise ein QR-Code).

Unter einem passiven Initialisierungsmodul ist vorliegend insbesondere ein Modul zu verstehen, dass kein Signal aussendet oder ein Signal nur nach einer Aktivierung bzw. Aufforderung durch ein mobiles Endgerät aussendet. Als Dateninhalt des passiven Initialisierungsmoduls kann der Initialisierungsdatensatz durch das mobile Endgerät aus dem passiven Initialisierungsmodul auslesbar sein. Bei einem graphischen Code, der an der Außenseite des Abgabepunkts angebracht sein kann, kann dieser durch eine Kamera des mobilen Endgeräts erfasst und der Dateninhalt aus dem erfassten graphischen Code extrahiert werden.

Bei einem NFC-Modul kann dieses durch ein NFC-Lesemodul eines mobilen Endgeräts zum Übertragen des Dateninhalts über ein NFC-Signal aufgefordert werden. Insbesondere als Antwort auf eine derartige Aufforderung kann das NFC-Initialisierungsmodul den Initialisierungsdatensatz aussenden.

Gemäß einer weiteren Ausführungsform des anmeldungsgemäßen Verfahrens kann das Verfahren ferner umfassen:
- Freigeben, durch ein Freigabemodul des Energieabgabesystems, eines Abgabevorgangs an dem Abgabepunkt erst nach einem Generieren des eindeutigen Tokens für den Abgabevorgang an dem Abgabepunkt.

Indem ein Abgabevorgang nur nach der Generierung eines eindeutigen Tokens gestartet und durchgeführt werden kann, kann die Sicherheit noch weiter verbessert werden. Insbesondere kann das Kommunikationsmodul des Hintergrundsystems unmittelbar nach einer Generierung eines eindeutigen Tokens ein Freigabedatum an den Abgabepunkt übertragen, für dessen Abgabepunktdatum der eindeutige Token erstellt wurde. Bei einem Empfang eines Freigabedatums durch den Abgabepunkt, insbesondere durch das Freigabemodul des Abgabepunkts, kann das Freigabemodul den Abgabevorgang freigeben, beispielsweise einen Stromfluss oder Kraftstofffluss freigeben. Das Freigabemodul kann beispielsweise in einer Ablaufsteuerung des Abgabepunkts integriert sein.

Gemäß einer weiteren bevorzugten Ausführungsform des anmeldungsgemäßen Verfahrens kann das Verfahren ferner umfassen:
- Feststellen, durch ein Prüfungsmodul des Hintergrundsystems, bei einem Empfang einer Tokenanfrage, ob an dem Abgabepunkt (augenblicklich) ein Abgabevorgang ausgeführt wird, basierend auf dem Abgabepunktdatum der Tokenanfrage, und
- Generieren des eindeutigen Tokens zumindest (vorzugsweise nur) dann, wenn festgestellt wird, dass (augenblicklich) kein Abgabevorgang an dem Abgabepunkt ausgeführt wird.

Um die Sicherheit noch weiter zu verbessern, kann vorgesehen sein, dass während der Durchführung eines Abgabevorgangs an einem Abgabepunkt kein weiterer eindeutiger Token für den Abgabepunkt generiert werden kann, an dem der Abgabevorgang ausgeführt wird. Hierdurch kann das Risiko einer Manipulation durch einen Dritten zumindest reduziert werden.

Bei einer Ausführungsform kann vorgesehen sein, dass wenn eine augenblickliche Ausführung eines Abgabevorgangs festgestellt wird, das Generieren eines eindeutigen Tokens für diesen Abgabepunkt unterbleibt. Beispielsweise kann eine entsprechende Mitteilung an das anfragende mobile Endgerät gesendet werden. Insbesondere für den Fall, dass ein Abgabevorgang erst nach einer Generierung eines Tokens freigegeben wird, kann entsprechend verfahren werden. Hierdurch kann sichergestellt werden, dass in diesem Fall pro Abgabevorgang nur ein Token generiert wird.

Gemäß einer weiteren Ausführungsform des anmeldungsgemäßen Verfahrens kann bei einem Feststellen, dass an dem Abgabepunkt ein Abgabevorgang (augenblicklich) ausgeführt wird, ferner geprüft werden, ob für den Abgabevorgang eine Verknüpfung in dem Datenspeicher bereits gespeichert ist. Insbesondere kann anhand des mindestens einen Abgabepunktdatums geprüft werden (beispielsweise durch das Ergänzungsmodul oder das Generierungsmodul oder ein weiteres Modul), ob für dieses Abgabepunktdatum eine Verknüpfung gespeichert ist, insbesondere mit einem gültigen Token. Mit anderen Worten, es kann geprüft werden, ob ein empfangenes Abgabepunktdatum identisch ist mit einem Abgabepunktdatum einer gespeicherten Verknüpfung. Zusätzlich kann geprüft werden, ob sich aus der Verknüpfung ergibt, dass der Abgabevorgang noch nicht abgeschlossen ist (z.B. weil ein entsprechendes (finales) Geld- und/oder Energiemengendatum nicht der Verknüpfung hinzugefügt ist). Insbesondere für den Fall, dass ein Abgabevorgang auch ohne eine vorherige Generierung eines Tokens gestartet werden kann, kann entsprechend verfahren werden. Hierdurch kann sichergestellt werden, dass auch in diesem Fall pro Abgabevorgang nur ein Token generiert wird. Insbesondere kann das Generieren des eindeutigen Tokens nur dann erfolgen, wenn festgestellt wird, dass für den Abgabevorgang keine gültige Verknüpfung gespeichert ist, aus der insbesondere hervorgeht, dass der Abgabevorgang noch nicht beendet ist.

Gemäß einer bevorzugten Ausführungsform des anmeldungsgemäßen Verfahrens kann das Kommunikationsmodul des Hintergrundsystems zu bestimmten Zeitpunkten (beispielsweise zyklisch bzw. regelmäßig) oder zumindest nahezu kontinuierlich von dem mindestens einen (insbesondere jedem) Abgabepunkt eine Angabe empfangen, ob ein Abgabevorgang an dem Abgabepunkt (augenblicklich) ausgeführt wird (oder nicht).

Insbesondere kann ein Abgabepunkt an das Hintergrundsystem zu bestimmten Zeitpunkten (beispielsweise zyklisch bzw. regelmäßig) oder zumindest nahezu kontinuierlich Zustandsdaten des Abgabepunkts übertragen. Zwischen dem Abgabepunkt (vorzugsweise jedem Abgabepunkt) und dem Hintergrundsystem kann insbesondere ein (drahtloses und/oder drahtgebundenes) Netzwerk vorgesehen sein. Über dieses Netzwerk können bidirektional zwischen Abgabepunkt/en und Hintergrundsystem Daten ausgetauscht werden. Insbesondere kann hierdurch durch das Hintergrundsystem zeitnah und sicher festgestellt werden, ob an einem bestimmten Abgabepunkt ein Abgabevorgang (augenblicklich) ausgeführt wird (oder nicht).

Alternativ kann (nur) bei einem Empfang einer Tokenanfrage ein Aussenden, durch das Kommunikationsmodul, einer Abfrage an den in der Tokenanfrage spezifizierten Abgabepunkt, ob an dem Abgabepunkt augenblicklich ein Abgabevorgang ausgeführt wird, und ein Empfangen einer Antwort auf die ausgesendete Abfrage erfolgen. Hierdurch kann die zu übertragene Datenmenge reduziert werden.

Insbesondere kann vorgesehen sein, dass das Hintergrundsystem für einen Abgabepunkt, also insbesondere einen Zapf- oder Ladepunkt, für den ein Token bereits generiert wurde, keine weiteren Token generiert, solange der zugehörige Abgabevorgang, also insbesondere der Tank- oder Ladevorgang, noch aktiv ist.

Vorzugsweise kann der mindestens eine Abgabepunkt ein Detektionsmodul zum Erfassen eines Ausgabevorrichtungszustands umfassen. Insbesondere kann durch das Detektionsmodul aufgrund des Zustands der Ausgabevorrichtung festgestellt werden, ob ein Abgabevorgang (augenblicklich) ausgeführt wird oder nicht. Der detektierte Zustand kann als Zustandsdaten an das Hintergrundsystem in vorbeschriebener Weise übertragen werden.

Wenn beispielsweise durch das Detektionsmodul detektiert wird, dass die Zapfpistole des Abgabepunkts nicht eingehängt ist oder ein Ladestecker eines Ladekabels in der Ladesteckdose des Abgabepunkts angeordnet ist oder der Ladestecker des Abgabepunkts nicht von der Ladesteckdose des Fahrzeugs getrennt ist oder ein Strom fließt, kann festgestellt werden, dass ein Abgabevorgang (augenblicklich) ausgeführt wird. Wenn hingegen festgestellt wird, dass die Zapfpistole des Abgabepunkts eingehängt ist oder kein Ladestecker eines Ladekabels in der Ladesteckdose des Abgabepunkts angeordnet ist oder der Ladestecker des Abgabepunkts von der Ladesteckdose des Fahrzeugs getrennt ist oder kein Strom fließt, kann detektiert werden, dass ein Abgabevorgang (augenblicklich) nicht ausgeführt wird.

In diesem Fall kann ein Nutzer nach dem Beenden des Abgabevorgangs von dem benutzten Abgabepunkt wegfahren, z.B. auf einen Parkplatz, seinen Token weiterverwenden für weitere zahlungspflichtige Vorgänge bzw. Aktivitäten und später einen Gesamtbetrag zahlen (wie noch beschrieben wird), während ein weiterer Nutzer bzw. ein weiteres mobiles Endgerät an dem benutzten Abgabepunkt ein Generieren eines neuen Tokens (unverzögert) veranlassen kann.

Wie beschrieben wurde, kann das Kommunikationsmodul des Hintergrundsystems in Echtzeit (soweit dies technisch möglich ist) Zustandsdaten beispielsweise von einer lokalen Ablaufsteuerung (auch als Forecourt-Steuerung bezeichnet) und/oder dem Detektionsmodul des mindestens einen Abgabepunkts erhalten. Hierdurch kann das Hintergrundsystem zu jedem laufenden, unbezahlten Vorgang an einem Abgabepunkt nur genau den einen Token generieren und für denselben Abgabepunkt einen nächsten Token dann (und erst dann) generieren, wenn der vorherige Abgabevorgang beendet wurde.

Gemäß einer weiteren Ausführungsform des anmeldungsgemäßen Verfahrens kann das Verfahren ferner umfassen:
- Empfangen, durch das Kommunikationsmodul, eines Energie(mengen)datums der in dem Abgabevorgang abgegebenen Energie und/oder eines für den Abgabevorgang zu entrichtendes Gelddatums (insbesondere zusammen mit einem Abgabepunktdatum), und
- Hinzufügen, durch das Ergänzungsmodul, des Energiedatums und/oder des Gelddatums zu der gespeicherten Verknüpfung.

Vorzugsweise kann das Energiedatum und/oder das Gelddatum zusammen mit einem Abgabepunktdatum des Abgabepunkts von diesem Abgabepunkt empfangen werden. Insbesondere anhand des Abgabepunktdatums kann das Energiedatum und/oder das Gelddatum einer gespeicherten Verknüpfung mit identischem Abgabepunktdatum (und einem gültigen Token) hinzugefügt werden.

Wie bereits beschrieben wurde, können zwischen einem Abgabepunkt und dem Hintergrundsystem Daten ausgetauscht werden. Zumindest bei Detektion einer Beendigung des Abgabevorgangs kann zumindest ein Energiedatum der in dem Abgabevorgang abgegebenen Energiemenge (z.B. eine bestimmte Kraftstoffmenge, eine bestimmte elektrische Energiemenge etc.) durch das Hintergrundsystem von dem Abgabepunkt empfangen werden. Beispielsweise kann ein Abgabepunkt über einen Energiemengenzähler verfügen.

Zusätzlich oder alternativ kann ein für den Abgabevorgang zu entrichtendes Gelddatum empfangen werden. Alternativ kann das Gelddatum aus der empfangenen Energiemenge bestimmt werden, beispielsweise basierend auf einem Tarifdatum. Indem das Gelddatum und insbesondere das Energiedatum der Verknüpfung hinzugefügt werden, kann der Abgabevorgang im Nachgang anhand des eindeutigen Tokens sicher und zuverlässig bezahlt werden.

Beispielsweise kann, gemäß einer weiteren Ausführungsform des anmeldungsgemäßen Verfahrens, das mindestens eine Gelddatum der gespeicherten Verknüpfung an einer Kassenvorrichtung des Energieabgabesystems, einem Bezahlterminal des Energieabgabesystems oder unter Nutzung einer auf dem mobilen Endgerät installierten Bezahlanwendung entrichtet werden. Insbesondere können in einer einzigen Transaktion sämtliche der Verknüpfung hinzugefügten Gelddaten zusammen entrichtet werden, insbesondere anhand des generierten eindeutigen Tokens. Beispielsweise kann der Token an einer Kassenvorrichtung oder einem Bezahlterminal durch ein Lesemodul aus dem mobilen Endgerät ausgelesen werden und dann insbesondere mittels einer Zahlabfrage an das Hintergrundsystem übertragen werden. Das Hintergrundsystem kann anhand des empfangenen Tokens die gespeicherte Verknüpfung identifizieren. Das mindestens eine Gelddatum kann dann an die Kassenvorrichtung oder das Bezahlterminal (oder das mobile Endgerät) übertragen werden. Dann kann das mindestens eine Gelddatum in herkömmlicher Weise bezahlt werden.

In sicherer und nutzerfreundlicher Weise kann ein Bezahlvorgang abgewickelt werden. Insbesondere kann unter einer anmeldungsgemäßen Verknüpfung ein (virtueller) Warenkorb verstanden werden.

In einer weiteren Ausführungsform kann vorgesehen sein, dass das Hintergrundsystem für einen Abgabepunkt, für den bereits der Token generiert wurde, keinen weiteren Token generiert, solange das mindestens eine Zahldatum der Verknüpfung des ersten Tokens (also insbesondere zumindest das für den Abgabevorgang zu entrichtende Gelddatum) noch nicht bezahlt ist. In diesem Fall muss ein Nutzer nach dem Beenden des Abgabevorgangs das mindestens eine Zahldatum der Verknüpfung von seinem Token zahlen, damit danach ein weiterer Nutzer an dem benutzten Abgabepunkt in zuvor beschriebener Weise die Generierung eines Tokens initiieren kann.

Bei dieser Ausführungsform ist insbesondere vorgesehen, dass das Hintergrundsystem in Echtzeit (soweit dies technisch möglich ist) Daten aus einem Bezahlsystem des Energieabgabesystems und aus der lokalen Ablaufsteuerung des mindestens einen Abgabepunkts erhält. Hierdurch kann insbesondere sichergestellt werden, dass das Hintergrundsystem zu jedem laufenden, unbezahlten Vorgang an einem Abgabepunkt nur genau den einen Token generiert und für denselben Abgabepunkt einen nächsten Token dann (und erst dann) generieren kann, wenn das mindestens eine Zahldatum der Verknüpfung des ersten Tokens bezahlt wurde.

Gemäß einer weiteren Ausführungsform des anmeldungsgemäßen Verfahrens kann das Verfahren ferner umfassen:
- Kennzeichnen, durch ein Kennzeichenmodul des Hintergrundsystems, des eindeutigen Tokens als ungültigen Token, wenn das mindestens eine Gelddatum der für den eindeutigen Token gebildeten Verknüpfung beglichen wurde (oder wenn die Gültigkeitszeitdauer abgelaufen ist).

Durch Kennzeichnen eines eindeutigen Tokens als ungültigen Token kann insbesondere bewirkt werden, dass ein Hinzufügen von weiteren Vorgangsdaten zu der Verknüpfung von diesem ungültigen Token blockiert wird. Hierdurch kann die Sicherheit weiter verbessert werden.

In einem weiteren Beispiel kann das Initialisierungsmodul durch einen Nahfeld Sender und Empfänger gebildet sein, insbesondere durch ein Bluetooth Sender und Empfänger. Dieser veranlasst das mobile Endgerät zum Aussenden eines Advertising-Signals. Anschließend empfängt der Bluetooth Empfänger die Bluetooth Adresse des mobilen Endgerätes und speichert diese, insbesondere gehashed, als Token des Abgabevorgangs. Es ist denkbar, dass zuvor eine Bestätigung des Nutzers vorgesehen sein kann, um die Verbindung des richtigen mobilen Endgerätes mit dem Ladevorgang und der Verknüpfung sicherzustellen. Für weitere zahlungspflichtige Vorgänge/Aktionen kann nun das Advertising-Signal des mobilen Endgerätes und die darin übermittelte Bluetooth Adresse herangezogen werden, um die Verknüpfung zu identifizieren. Dazu kann vorzugsweise vorgesehen sein, dass das Bluetooth Signal des mobilen Endgeräts eine Mindestsignalstärke aufweisen muss - also nah genug am Empfänger sein muss.

Ein weiterer Aspekt der Anmeldung ist ein Hintergrundsystem für ein Energieabgabesystem zum Abgeben von Energie an Fahrzeuge. Das Hintergrundsystem umfasst mindestens ein Kommunikationsmodul, eingerichtet zum Empfangen einer Tokenanfrage von einem mobilen Endgerät. Die Tokenanfrage enthält zumindest ein Abgabepunktdatum eines für einen Abgabevorgang bestimmten Abgabepunkts des Energieabgabesystems. Das Hintergrundsystem umfasst mindestens ein Generierungsmodul, eingerichtet zum Generieren eines eindeutigen Tokens bei einem Empfang der Tokenanfrage. Das Hintergrundsystem umfasst mindestens ein Verknüpfungsmodul, eingerichtet zum Bilden einer Verknüpfung zumindest zwischen dem Abgabevorgang des Abgabepunkts und dem generierten eindeutigen Token, zumindest basierend auf dem Abgabepunktdatum. Das Hintergrundsystem umfasst mindestens ein Speichermodul, eingerichtet zum Speichern der gebildeten Verknüpfung in einem Datenspeicher des Hintergrundsystems. Das Kommunikationsmodul ist eingerichtet zum Übertragen des generierten eindeutigen Tokens an das mobile Endgerät. Der übertragene Token ist auslesbar auf dem mobilen Endgerät speicherbar.

Das Hintergrundsystem kann insbesondere gemäß dem vorbeschriebenen Verfahren betrieben werden. Wie ferner beschrieben wurde, kann gemäß weiterer Ausführungsformen das Hintergrundsystem weitere Module umfassen, wie ein Ergänzungsmodul, ein Prüfmodul, ein Bezahlsystem etc.

Ein noch weiterer Aspekt der Anmeldung ist ein Energieabgabesystem zum Abgeben von Energie, insbesondere in Form von Kraftstoff und/oder elektrischer Energie, an Fahrzeuge. Das Energieabgabesystem umfasst ein zuvor beschriebenes Hintergrundsystem. Das Energieabgabesystem umfasst mindestens einen Abgabepunkt, eingerichtet zum Abgeben der Energie an ein Fahrzeug.

Vorzugsweise umfasst das Energieabgabesystem eine Mehrzahl von Abgabepunkten. Beispielsweise kann das Energieabgabesystem mindestens eine Abgabesäule mit mindestens einem Abgabepunkt umfassen, vorzugsweise zumindest zwei Abgabepunkten, wie beschrieben worden ist. Darüber hinaus kann das Energieabgabesystem das mindestens eine mobile Endgerät und/oder das mindestens eine Lesemodul, eingerichtet zum Auslesen eines eindeutigen Tokens aus einem mobilen Endgerät umfassen. Beispielsweise kann das Energieabgabesystem eine Kassenvorrichtung, ein Bezahlterminal oder ein anderes Terminal umfassen.

Gemäß einer bevorzugten Ausführungsform des anmeldungsgemäßen Energieabgabesystems kann an dem mindestens einen Abgabepunkt ein (zuvor beschriebenes) Initialisierungsmodul angeordnet sein, eingerichtet zum Bereitstellen eines Initialisierungsdatensatzes, enthaltend zumindest das Abgabepunktdatum des Abgabepunkts, an dem das Initialisierungsmodul angeordnet ist, und insbesondere ein Kommunikationsdatum zum Ermöglichen eines Übertragens der Tokenanfrage an das Kommunikationsmodul.

Ein zuvor beschriebenes Modul (z.B. Verknüpfungsmodul, Ergänzungsmodul, Speichermodul etc.), eine Vorrichtung, eine Einheit etc. kann zumindest teilweise Hardwareelemente (z.B. Prozessor, Speichermittel etc.) und/oder zumindest teilweise Softwareelemente (z.B. ausführbaren Code) umfassen. Es sei ferner angemerkt, dass Begriffe, wie "erste"; "zweite", "weitere" etc. nicht eine Reihenfolge angeben, sondern insbesondere zur Unterscheidung zweier Elemente dienen.

Insbesondere kann das Verfahren zumindest teilweise in einem Computerprogramm implementiert sein. Das Computerprogramm umfasst Programmanweisungen, die einen Prozessor zur Ausführung und/oder Steuerung des Verfahrens gemäß der Anmeldung veranlassen, wenn das Computerprogramm von dem Prozessor ausgeführt wird. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden.

Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein.

Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger/persistenter oder flüchtiger) Programmspeicher des Prozessors oder ein Teil davon. Das Speichermedium kann beispielsweise ein gegenständliches oder körperliches Speichermedium sein.

Das Hintergrundsystem kann mindestens eine Rechenvorrichtung umfassen, eingerichtet zur Ausführung und/oder Steuerung des anmeldungsgemäßen Verfahrens oder umfassend jeweilige Mittel zur Ausführung und/oder Steuerung der Schritte des anmeldungsgemäßen Verfahrens. Dabei können entweder alle Schritte des anmeldungsgemäßen Verfahrens von den Mitteln gesteuert werden, oder alle Schritte des anmeldungsgemäßen Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden.

Die Mittel der offenbarten Rechenvorrichtung können, wie beschrieben, Hardware- und/oder Software-Komponenten umfassen. Die Mittel können beispielsweise mindestens einen Speicher mit Programmanweisungen eines Computerprogramms (z.B. des anmeldungsgemäßen Computerprogramms) und mindestens einen Prozessor ausgebildet zum Ausführen von Programmanweisungen aus dem mindestens einen Speicher umfassen. Dementsprechend soll gemäß der Anmeldung auch zumindest eine Rechenvorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Rechenvorrichtung zu veranlassen, das Verfahren gemäß der Anmeldung auszuführen und/oder zu steuern.

Die Merkmale der Verfahren, Hintergrundsysteme und Energieabgabesysteme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Verfahren, das anmeldungsgemäße Hintergrundsystem und das anmeldungsgemäße Energieabgabesystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit den Zeichnungen. In den Zeichnungen zeigt:
- Fig. 1: eine schematische Ansicht eines Ausführungsbeispiels eines Energieabgabesystems gemäß der vorliegenden Anmeldung mit einem Ausführungsbeispiel eines Hintergrundsystems gemäß der vorliegenden Anmeldung,
- Fig. 2: ein Diagramm eines Ausführungsbeispiels eines Verfahrens gemäß der vorliegenden Anmeldung, und
- Fig. 3: eine schematische Veranschaulichung eines Ablaufs eines Ausführungsbeispiels eines Verfahrens gemäß der vorliegenden Anmeldung bei einem Ausführungsbeispiels eines Energieabgabesystems gemäß der vorliegenden Anmeldung.

Nachfolgend werden für ähnliche Elemente ähnliche Bezugszeichen verwendet.

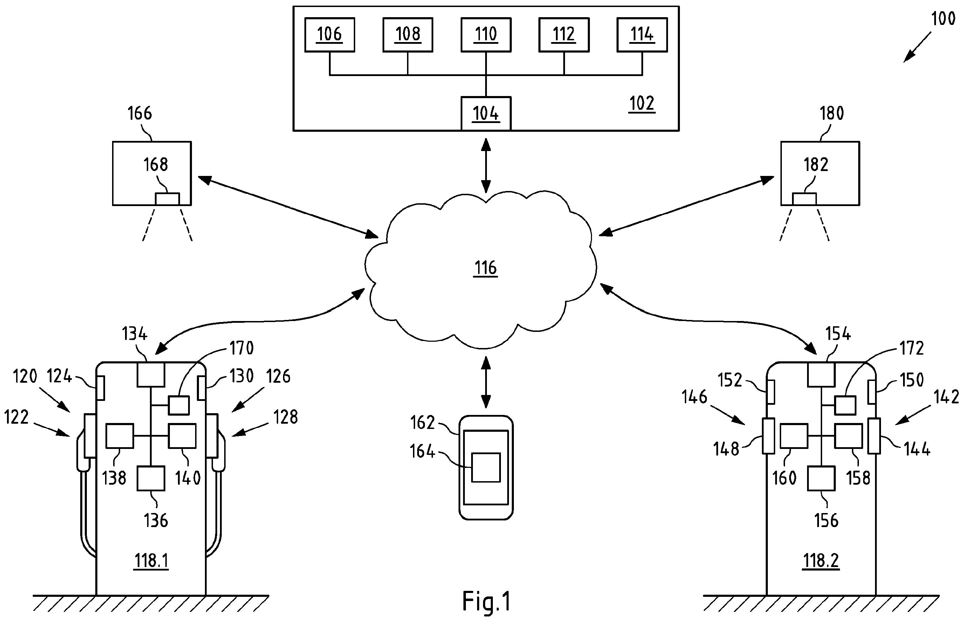

Die Figur 1 zeigt eine schematische Ansicht eines Ausführungsbeispiels eines Energieabgabesystems 100 gemäß der vorliegenden Anmeldung mit einem Ausführungsbeispiel eines Hintergrundsystems 102 gemäß der vorliegenden Anmeldung.

Das Energieabgabesystem 100 ist eingerichtet zum Abgeben von Energie, beispielsweise in Form von elektrischer Energie und/oder in Form von flüssigem Kraftstoff und/oder in Form von gasförmigem Kraftstoff. Vorzugsweise ist das Energieabgabesystem 100 eine Tankstelle.

Das Energieabgabesystem 100 umfasst das Hintergrundsystem 102 und mindestens einen Abgabepunkt 120, 126, 142, 146. Insbesondere kann ein Energieabgabesystem 100 mindestens eine Abgabesäule 118.1, 118.2 mit mindestens einem Abgabepunkt 120, 126, 142, 146 umfassen. Vorliegend umfasst das dargestellte Energieabgabesystem 100 beispielhaft zwei Abgabesäulen 118.1, 118.2 mit jeweils zwei Abgabepunkten 120, 126, 142, 146.

Ein Abgabepunkt 120, 126, 142, 146 ist eingerichtet zum Abgeben von Energie an ein (nicht gezeigtes) Fahrzeug. Ein Abgabepunkt 120, 126, 142, 146 kann insbesondere eine Ausgabevorrichtung 122, 128, 144, 148 umfassen, eingerichtet zum Abgeben der Energie an ein Fahrzeug.

Die erste Abgabesäule 118.1 ist beispielhaft eine Zapfsäule 118.1 mit einem ersten Zapfpunkt 120 und einem zweiten Zapfpunkt 126. Der erste Zapfpunkt 120 kann eine erste Ausgabevorrichtung 122 insbesondere in Form eines Schlauchs mit einer Zapfpistole aufweisen. Der zweite Zapfpunkt 126 kann eine zweite Ausgabevorrichtung 128 insbesondere in Form eines Schlauchs mit einer Zapfpistole aufweisen. Ein Zapfpunkt 120, 126 kann insbesondere zum Ausgeben von Kraftstoff (z.B. Diesel, Benzin etc.) an ein Fahrzeug eingerichtet sein.

Die Abgabe des Kraftstoffs durch einen Zapfpunkt 120, 126 kann durch mindestens eine (lokale) Ablaufsteuerung 136 der Zapfsäule 118.1 gesteuert werden. Darüber hinaus kann die Zapfsäule 118.1 einen ersten Kraftstoffzähler 138 und einen zweiten Kraftstoffzähler 140 umfassen. Ein Kraftstoffzähler 138, 140 ist insbesondere eingerichtet zum Messen der in einem Abgabevorgang an ein Fahrzeug angegebenen Kraftstoffmenge. Der erste Kraftstoffzähler 138 kann dem ersten Zapfpunkt 120 und der zweite Kraftstoffzähler 140 dem zweiten Zapfpunkt 126 zugeordnet sein.

Darüber hinaus kann die Zapfsäule 118.1 bzw. der mindestens eine Zapfpunkt 120, 126 ein Detektionsmodul 170 umfassen, eingerichtet zum Erfassen eines Ausgabevorrichtungszustands einer Ausgabevorrichtung 122, 128. Insbesondere kann das Detektionsmodul 170 eingerichtet sein zum Detektieren, ob die Zapfpistole in einer Aufnahme des Zapfpunkts 120, 126 eingehängt ist oder nicht.

Zudem kann die Zapfsäule über eine Kommunikationseinheit 134 verfügen. Die Kommunikationseinheit 134 kann eingerichtet sein zum Austauschen von Daten zumindest mit dem Hintergrundsystem 102 über ein (drahtloses und/oder drahtgebundenes) Netzwerk 116. Beispielsweise können gemessene Kraftstoffmengen als Kraftstoffdatum und/oder ein erfasster Ausgabevorrichtungszustand (z.B. Zapfpistole eingehängt oder nicht eingehängt) als Zustandsdatum an das Hintergrundsystem 102 übertragen und/oder ein Freigabedatum von dem Hintergrundsystem 102 empfangen werden.

Beispielsweise kann die Ablaufsteuerung 136 ein Abgeben von Kraftstoff durch einen Abgabepunkt 120, 126 nur nach einem Empfang eines Freigabedatums freigeben bzw. ermöglichen.

Die zweite Abgabesäule 118.2 ist beispielhaft eine Ladesäule 118.2 bzw. eine Ladestation 118.2 mit einem ersten Ladepunkt 142 und einem zweiten Ladepunkt 146. Der erste Ladepunkt 142 kann als erste Ausgabevorrichtung 144 eine Ladesteckdose umfassen und der zweite Ladepunkt 146 kann als zweite Ausgabevorrichtung 148 eine Ladesteckdose umfassen. Bei Varianten der Anmeldung kann als Ausgabevorrichtung auch ein (festangeschlagenes) Ladekabel mit einem Ladestecker angeordnet sein.

Bei einem Ladepunkt 142, 146 kann es sich um einen AC oder DC Ladepunkt handeln. Insbesondere ist ein Ladepunkt 142, 146 zumindest zum Abgeben von elektrischer Energie (bzw. Strom) an ein Elektrofahrzeug bzw. eine Batterie eines Elektrofahrzeugs eingerichtet.

Die Abgabe der elektrischen Energie durch einen Ladepunkt 142,146 kann durch mindestens eine (lokale) Ablaufsteuerung 156 der Ladesäule 118.2 gesteuert werden.

Darüber hinaus kann die Ladesäule 118.2 einen ersten elektrischen Energiemengenzähler 158 und einen zweiten elektrischen Energiemengenzähler 160 umfassen. Ein elektrischer Energiemengenzähler 158, 160 ist insbesondere eingerichtet zum Messen der in einem Abgabevorgang an ein Fahrzeug angegebenen elektrischen Energiemenge. Der erste Energiemengenzähler 158 kann dem ersten Ladepunkt 142 und der zweite Energiemengenzähler 160 dem zweiten Ladepunkt 146 zugeordnet sein.

Darüber hinaus kann die Ladesäule 118.2 bzw. der mindestens eine Ladepunkt 142, 146 ein Detektionsmodul 172 umfassen, eingerichtet zum Erfassen eines Ausgabevorrichtungszustands einer Ausgabevorrichtung 144, 148. Insbesondere kann das Detektionsmodul 172 eingerichtet sein zum Detektieren, ob sich ein Ladestecker in der Ladesteckdose befindet oder nicht, ob ein Strom fließt oder nicht oder dergleichen.

Zudem kann die Ladesäule 118.2 über eine Kommunikationseinheit 154 verfügen. Die Kommunikationseinheit 154 kann eingerichtet sein zum Austauschen von Daten zumindest mit dem Hintergrundsystem 102 über ein (drahtloses und/oder drahtgebundenes) Netzwerk 116. Beispielsweise können gemessene elektrische Energiemengen als Energiemengendatum und/oder ein erfasster Ausgabevorrichtungszustand (z.B. Ladestecker eingesteckt oder nicht eingehängt) als Zustandsdatum an das Hintergrundsystem 102 übertragen und/oder ein Freigabedatum von dem Hintergrundsystem 102 empfangen werden.

Beispielsweise kann die Ablaufsteuerung 156 ein Abgeben von elektrischer Energie durch einen Abgabepunkt 142, 146 nur nach einem Empfang eines Freigabedatums freigeben bzw. ermöglichen.

Wie ferner aus der Figur 1 zu entnehmen ist, kann vorzugsweise jeder Zapfpunkt 120, 126 ein Initialisierungsmodul 124, 130 aufweisen. Ebenso ist insbesondere jedem Ladepunkt 142, 146 jeweils ein Initialisierungsmodul 150, 152 zugeordnet.

Insbesondere kann das Initialisierungsmodul 124, 130, 150, 152 benachbart zu der jeweiligen Ausgabevorrichtung 122, 128, 144, 148 angeordnet sein.

Ein Initialisierungsmodul 124, 130, 150, 152 des Energieabgabesystems 100 ist insbesondere eingerichtet zum Bereitstellen eines Initialisierungsdatensatzes, enthaltend zumindest ein Abgabepunktdatum des Abgabepunkts 120, 126, 142, 146, an dem das Initialisierungsmodul 124, 130, 150, 152 angeordnet ist bzw. dem es zugeordnet ist. Vorzugsweise kann das Abgabepunktdatum eine systemweit eindeutige Abgabepunktkennung des jeweils zugeordneten Abgabepunkts 120, 126, 142, 146 sein. Mit der Abgabepunktkennung kann also insbesondere der Abgabepunkt 120, 126, 142, 146 eindeutig identifiziert werden, an dem ein Abgabevorgang durchgeführt wird oder durchgeführt werden soll.

Ein Initialisierungsmodul 124, 130, 150, 152 kann vorzugsweise ein passives Initialisierungsmodul 124, 130, 150, 152 sein. Beispielsweise kann das passive Initialisierungsmodul 124, 130, 150, 152 ein graphischer Code (z.B. ein QR-Code) sein, der an einer Außenseite einer Abgabesäule 118.1, 118.2 im Bereich des jeweiligen Abgabepunkts 120, 126, 142, 146 angebracht sein kann, beispielsweise aufgedruckt oder aufgeklebt.

Ein mobiles Endgerät 162 (z.B. ein Smartphone) kann mit einer Kamera den graphischen Code erfassen und insbesondere den darin enthaltenen Initialisierungsdatensatz (z.B. Abgabepunktkennung, Kommunikationsdatum in Form einer Webseitenadresse oder einer Kommunikationsadresse und Instruktionen) extrahieren. Beispielsweise unter Steuerung einer auf dem mobilen Endgerät 162 installierten Energieabgabeanwendung 164 und/oder durch Ausführen der empfangenen Instruktionen kann unter Verwendung der Abgabepunktkennung und des Kommunikationsdatums eine Tokenanfrage generiert und versendet werden, beispielsweise die Webseite aufgerufen und eine Tokenanfrage durch eine Nutzeraktion bestätigt werden.

Alternativ (oder auch zusätzlich) kann als passives Initialisierungsmodul 124, 130, 150, 152 ein NFC (Nearfield Comunication) Modul an der Abgabesäule 118.1, 118.2 im Bereich des jeweiligen Abgabepunkts 120, 126, 142, 146 angeordnet sein.

Ein mobiles Endgerät 162 (z.B. ein Smartphone) kann mit einem NFC-Lesemodul das NFC-Modul auslesen und insbesondere den enthaltenen Initialisierungsdatensatz (z.B. Abgabepunktkennung, Kommunikationsdatum in Form einer Webseitenadresse oder einer Kommunikationsadresse und Instruktionen) aus dem empfangenen NFC-Signal extrahieren. Beispielsweise unter Steuerung einer auf dem mobilen Endgerät 162 installierten Energieabgabeanwendung 164 und/oder durch Ausführen der empfangenen Instruktionen kann unter Verwendung der Abgabepunktkennung und des Kommunikationsdatums eine Tokenanfrage generiert und versendet werden, beispielsweise die Webseite aufgerufen und eine Tokenanfrage durch eine Nutzeraktion bestätigt werden.

Beispielsweise kann das Energieabgabesystem 100 das mindestens eine mobile Endgerät 162 umfassen.

Optional kann das Energieabgabesystem 100 mindestens ein (Bezahl-)Terminal 180 mit einem Lesemodul 182 umfassen, eingerichtet zum Erfassen bzw. Auslesen eines auf einem mobilen Endgerät 162 gespeicherten eindeutigen (digitalen) Token (z.B. als NFC-basierter Token, QR-Code-basierter Token, Barcode-basierter Token oder Bluetooth-basierter Token). Beispielsweise kann als Lesemodul 182 ein NFC-Lesegerät vorgesehen sein, eingerichtet zum Auslesen eines NFC-basierten Tokens. Alternativ (oder auch zusätzlich) kann als Lesemodul 182 ein kamerabasiertes Lesemodul vorgesehen sein, eingerichtet zum Auslesen eines QR-Code-basierten Tokens oder eines Barcode-basierten Tokens.

Insbesondere kann an einem Terminal 180 ein weiterer Vorgang mit dem ausgelesenen eindeutigen Token verknüpft werden (ohne dass ein für diesen Vorgang zu entrichtendes Gelddatum unmittelbar bezahlt werden muss). Insbesondere kann das Lesemodul 182 bzw. das Terminal 180 eingerichtet sein, den ausgelesenen eindeutigen Token zusammen mit mindestens einem (weiteren) Vorgangsdatum (z.B. ein Gelddatum vorzugsweise zusammen mit einem Vorgangsinformationsdatum über den durchgeführten Vorgang) eines weiteren dem Nutzer zuordenbaren Vorgangs an das Hintergrundsystem 102 zu übertragen.

Optional kann das Energieabgabesystem 100 ferner mindestens eine Kassenvorrichtung 166 mit einem weiteren Lesemodul 168 umfassen. Das weitere Lesemodul 168 kann entsprechend dem beschriebenen Lesemodul 182 eingerichtet sein. Die Kassenvorrichtung 166 kann insbesondere eingerichtet sein zum Ermöglichen eines Bezahlens mindestens eines Gelddatums einer gespeicherten Verknüpfung, basierend auf dem eindeutigen Token, wie noch näher beschrieben wird.

Das Hintergrundsystem 102 umfasst ein Kommunikationsmodul 104. Das Kommunikationsmodul ist zumindest eingerichtet zum Empfangen einer Tokenanfrage von einem mobilen Endgerät 162. Das Kommunikationsmodul 104 kann insbesondere eingerichtet sein zum Senden und Empfangen von Daten. Darüber hinaus kann das Kommunikationsmodul 104 zwei oder mehr Kommunikationselemente zum Unterstützen verschiedener Übertragungstechnologien umfassen. Auch kann das Kommunikationsmodul 104 zum Bereitstellen einer Webseite eingerichtet sein.

Ferner umfasst das Hintergrundsystem 102 mindestens ein Generierungsmodul 106. Das Generierungsmodul 106 (insbesondere ein computergestützter Tokengenerator) ist eingerichtet zum Generieren eines eindeutigen Tokens bei Empfang der Tokenanfrage. Diese kann insbesondere durch das Kommunikationsmodul 104 dem Generierungsmodul 106 zur Verfügung gestellt werden.

Weiterhin umfasst das Hintergrundsystem 102 mindestens ein (computergestütztes) Verknüpfungsmodul 108. Das Verknüpfungsmodul 108 ist eingerichtet zum Bilden einer Verknüpfung zumindest zwischen dem Abgabepunktdatum der empfangenen Tokenanfrage und dem generierten eindeutigen Token, der aufgrund der genannten Tokenanfrage durch das Generierungsmodul 106 generiert wurde.

Zusätzlich umfasst das Hintergrundsystem 102 ein (computergestütztes) Speichermodul 110, das eingerichtet ist zum Speichern der gebildeten Verknüpfung in einem Datenspeicher 112 des Hintergrundsystems 102.

Optional kann das Hintergrundsystem 102 ein (computergestütztes) Ergänzungsmodul 114 umfassen. Das Ergänzungsmodul 114 kann eingerichtet sein zum Hinzufügen eines weiteren Vorgangsdatums zu der gespeicherten Verknüpfung, basierend auf einem (z.B. von dem Terminal 180 bzw. dem Lesemodul 182) empfangenen Vorgangsdatensatz, enthaltend einen eindeutigen Token und mindestens ein Vorgangsdatum, und dem gespeicherten eindeutigen Token bzw. der gespeicherten Verknüpfung.

Das (weitere) Vorgangsdatum kann insbesondere ein für den ausgeführten weiteren Vorgang zu entrichtendes Gelddatum sein bzw. umfassen. Insbesondere können eine Mehrzahl von Gelddaten für eine entsprechende Anzahl an ausgeführten Vorgängen, beispielsweise Kaufvorgängen, der Verknüpfung anhand des eindeutigen Tokens hinzugefügt werden.

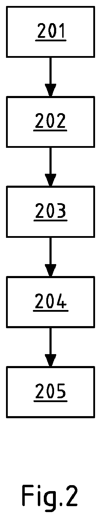

Die Funktionsweise des Energieabgabesystems 100 gemäß der Figur 1 wird nachfolgend näher anhand des Ausführungsbeispiels eines Verfahrens gemäß der vorliegenden Anmeldung nach Figur 2 beschrieben.

In einem ersten Schritt 201 erfolgt ein Empfangen, durch ein Kommunikationsmodul 104 des Hintergrundsystems 102, einer Tokenanfrage von einem mobilen Endgerät 162, wobei die Tokenanfrage mindestens ein Abgabepunktdatum eines für einen Abgabevorgang bestimmten Abgabepunkts 120, 126, 142, 146 des Energieabgabesystems 100 enthält.

Wie beispielhaft beschrieben wurde, kann vor dem Schritt 201 ein Bereitstellen, durch ein an dem Abgabepunkt 120, 126, 142, 146 angeordnetes Initialisierungsmodul 124, 130, 150, 152 des Energieabgabesystems 100, eines Initialisierungsdatensatzes erfolgen, enthaltend zumindest das mindestens eine Abgabepunktdatum des Abgabepunkts 120, 126, 142, 146, an dem das Initialisierungsmodul 124, 130, 150, 152 angeordnet ist, und insbesondere ein Kommunikationsdatum zum Ermöglichen eines Übertragens der Tokenanfrage an das Kommunikationsmodul.

Insbesondere kann das mobile Endgerät 162 einen Initialisierungsdatensatz von dem Initialisierungsmodul 124, 130, 150, 152 erhalten und, basierend auf dem erhaltenen Initialisierungsdatensatz, die Tokenanfrage an das Hintergrundsystem 102 übertragen.

Beispielsweise kann das mobile Endgerät 162 im Rahmen des Schritts 201 eine Webseite aufrufen, basierend auf dem Kommunikationsdatum des Initialisierungsdatensatzes. Die angezeigte Webseite kann ein Bestätigungsfeld umfassen, mit der die Generierung eines eindeutigen Tokens (für den bestimmten Abgabepunkt) durch Betätigung einer Nutzerschnittstelle (z.B. ein Touchdisplay) veranlasst werden kann. Die Detektion der Betätigung des Bestätigungsfelds kann insbesondere das Empfangen der Tokenanfrage sein.

Ferner kann (allgemein) die angezeigte Webseite vor Betätigung des Bestätigungsfeldes eine Eingabeaufforderung umfassen z.B. zur Eingabe eines Kennzeichens und/ oder eines Abgabepunktdatums (insbesondere, wenn der Initialisierungsdatensatz dieses nicht beinhaltet).

In einem Schritt 202 erfolgt ein Generieren, durch das Generierungsmodul 106 des Hintergrundsystems 102, eines eindeutigen Tokens bei Empfang der Tokenanfrage. Wie bereits beschrieben wurde, kann bei bestimmten Ausführungsformen vorgesehen sein, dass ein Token erst bei Vorliegen einer weiteren Bedingung generiert wird.

Das Generierungsmodul 106 kann eindeutige Token nach einem vorgegebenen und in einem Speicher des Hintergrundsystems 102 gespeicherten Generierungsalgorithmus generieren. Der generierte eindeutige Token kann mindestens ein Zeitdatum enthalten, insbesondere ein Ablaufzeitdatum und/oder einen Zeitstempel.

In einem Schritt 203 erfolgt ein Bilden einer Verknüpfung, durch das Verknüpfungsmodul 108 des Hintergrundsystems 102, zumindest zwischen dem Abgabepunktdatum und dem generierten eindeutigen Token. Insbesondere wird der generierte Token dem Abgabepunktdatum hinzugefügt, für dessen Tokenanfrage der genannte Token generiert wurde.

In einem Schritt 204 erfolgt ein Speichern, durch das Speichermodul 110, der gebildeten Verknüpfung in einem Datenspeicher 112 des Hintergrundsystems 102. Bei Varianten der Anmeldung können Verknüpfungsmodul und Speichermodul durch ein gemeinsames Modul gebildet sein.

In Schritt 205 erfolgt ein Übertragen, durch das Kommunikationsmodul 104, des generierten eindeutigen Tokens an das mobile Endgerät 162, das die Tokenanfrage gesendet hat, wobei der übertragene eindeutige Token auslesbar auf dem mobilen Endgerät speicherbar ist.

Wie beschrieben wurde, kann der Token beispielsweise ein NFC-basierter Token sein, der durch ein NFC-Lesemodul aus dem mobilen Endgerät 162 auslesbar ist. Alternativ (oder auch zusätzlich) kann der Token beispielsweise ein QR- oder Barcode-basierter Token sein. In diesem Fall kann der Token derart auf dem mobilen Endgerät 162 gespeichert werden, dass der Token auf einem Display des mobilen Endgerät 162 angezeigt werden kann, so dass der Token von einem kamerabasierten Lesemodul ausgelesen werden kann.

Der Datenspeicher 112 ist insbesondere ein nach einem generierten Token und/oder einem zugeordneten Abgabepunktdatum durchsuchbarer Datenspeicher 112. Dies ermöglicht es, einer gebildeten und gespeicherten Verknüpfung (zu einem späteren Zeitpunkt) weitere Daten hinzuzufügen, wie ein Energiedatum der in dem Abgabevorgang abgegebenen Energie und/oder ein für den Abgabevorgang zu entrichtendes Gelddatums und/oder ein weiteres Vorgangsdatum eines weiteren Vorgangs.

Beispielsweise kann in einem optionalen weiteren Schritt des Verfahrens ein Empfangen, durch das Kommunikationsmoduls 104, des durch ein entfernt von dem Hintergrundsystem 102 angeordnetes Lesemodul 182 aus dem mobilen Endgerät ausgelesenen eindeutigen Tokens und mindestens eines Vorgangsdatums eines weiteren Vorgangs von dem Lesemodul erfolgen. Insbesondere kann ein Vorgangsdatensatz empfangen werden, der zumindest einen ausgelesenen Token und mindestens ein Vorgangsdatum enthält.

Dann kann ein Hinzufügen, durch das Ergänzungsmodul 114, des weiteren Vorgangsdatums zu der gespeicherten Verknüpfung erfolgen, basierend auf dem empfangenen eindeutigen Token, dem gespeicherten eindeutigen Token und dem empfangenen Vorgangsdatum. Wenn der empfangene Token zu einem gespeicherten Token korrespondiert, kann das Ergänzungsmodul 114 das weitere Vorgangsdatum (z.B. ein weiteres Gelddatum) der Verknüpfung hinzufügen, deren gespeicherter Token identisch ist mit dem empfangenen Token.

Ferner kann in einem optionalen nicht dargestellten weiteren Schritt ein Empfangen, durch das Kommunikationsmodul 104, eines Energiedatums der in dem Abgabevorgang abgegebenen Energie und/oder eines für den Abgabevorgang zu entrichtendes Gelddatums erfolgen. Vorzugsweise kann ein Energiedatensatz empfangen werden, enthaltend zumindest das Abgabepunktdatum, an dem der Abgabevorgang durchgeführt wurde, und die während des genannten Abgabevorgangs abgegebene (und gemessene) Energie und ggf. ein für die abgegebene Energiemenge zu entrichtendes Gelddatum.

Insbesondere kann ein Abgabepunkt das Energiedatum und vorzugsweise das Gelddatum zusammen mit seinem Abgabepunktdatum an das Hintergrundsystem 102 übertragen.

Das Ergänzungsmodul 114 kann das Energiedatum und/oder das Gelddatum anhand des Abgabepunktdatums zu der gespeicherten Verknüpfung hinzufügen. Wenn das empfangene Abgabepunktdatum zu einem gespeicherten Abgabepunktdatum korrespondiert, kann das Ergänzungsmodul 114 das Energiedatum und/oder das Gelddatum der Verknüpfung hinzufügen, deren gespeichertes Abgabepunktdatum identisch ist mit dem empfangenen Abgabepunktdatum.

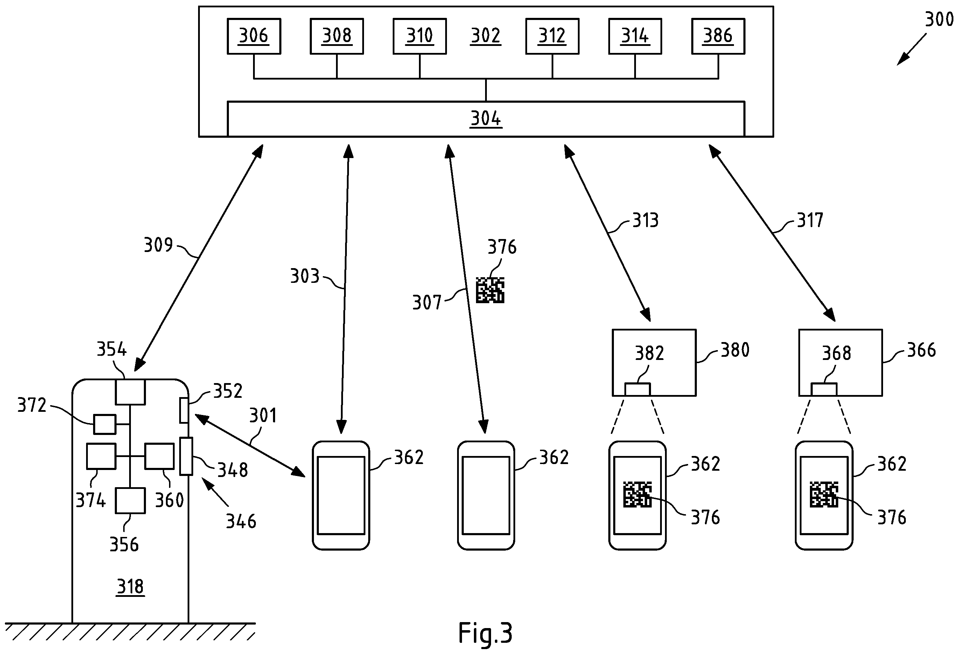

Die Figur 3 zeigt eine schematische Veranschaulichung eines Ablaufs eines Ausführungsbeispiels eines Verfahrens gemäß der vorliegenden Anmeldung bei einem Ausführungsbeispiels eines Energieabgabesystems 300 gemäß der vorliegenden Anmeldung. Zur Vermeidung von Wiederholungen werden nachfolgend im Wesentlichen nur die Unterschiede zu den vorherigen Ausführungsbeispielen beschrieben.

Das Verfahren und das Energieabgabesystem 300 werden nachfolgend beispielhaft anhand einer Ladesäule 318 erläutert, bei der vor einem Starten des Ladevorgangs eine Generierung eines Tokens erfolgen muss. Es versteht sich, dass die nachfolgenden Ausführungen auf andere Abgabepunktarten und/oder auf ein System übertragen werden können, bei dem ein Token auch erst nach dem Start eines Abgabevorgangs generiert werden kann.

Das Hintergrundsystem 302 umfasst vorliegend ein Kommunikationsmodul 304, ein Generierungsmodul 306, ein Verknüpfungsmodul 308, ein Speichermodul 310, einen Datenspeicher 312, ein Ergänzungsmodul 314 und ein Prüfungsmodul 386.

Die Ladesäule 318 umfasst vorliegend einen Ladepunkt 346 mit einer Ausgabevorrichtung 348 in Form einer Ladesteckdose und einem dem Ladepunkt zugeordneten Initialisierungsmodul 352. Darüber hinaus umfasst die Ladesäule 318 bzw. der Ladepunkt 346 vorliegend einen Energiemengenzähler 360, eine Ablaufsteuerung 356, ein Freigabemodul 374, eine Kommunikationseinheit 354 und ein Detektionsmodul 372. Bei Varianten der Anmeldung können das Freigabemodul und/oder das Detektionsmodul in der Ablaufsteuerung des Abgabepunkts integriert sein.

Um einen Abgabevorgang, vorliegend einen Ladevorgang, zu initiieren, ist zunächst die Generierung eines eindeutigen Tokens erforderlich. Ein dem Ladepunkt 346 zugeordnetes Initialisierungsmodul 352 stellt einen Initialisierungsdatensatz zur Verfügung. Über die Verbindung 301 (beispielsweise eine NFC-Verbindung) kann dieser durch ein mobiles Endgerät 362 ausgelesen werden.

Insbesondere kann der Initialisierungsdatensatz Instruktionen enthalten, die ein Übertragen einer Tokenanfrage von dem mobilen Endgerät 362 an das Hintergrundsystem 302 veranlassen, wenn sie von einem Prozessor ausgeführt werden. Das Übertragen der Tokenanfrage kann ferner beispielsweise auf einem Kommunikationsdatum des Initialisierungsdatensatzes basieren. Wie beschrieben wurde, kann alternativ das Kommunikationsdatum vorab in dem mobilen Endgerät gespeichert sein, beispielsweise in einer vorab installierten Energieabgabeanwendung des mobilen Endgeräts.

Beispielsweise kann die Tokenanfrage durch Aussenden einer Nachricht und/oder durch Aufrufen einer Webseite und Detektieren einer Tokengenerierungsaufforderung bzw. einer Betätigung eines Bestätigungsfelds der Webseite über eine Verbindung 303 übertragen werden, wie beschrieben wurde.

Vor einer Generierung eines eindeutigen Tokens kann anhand des Abgabepunktdatums (insbesondere eine Ladepunktkennung) der Tokenanfrage geprüft werden, ob an dem Ladepunkt 346 bereits bzw. augenblicklich ein Ladevorgang ausgeführt wird oder nicht. Insbesondere kann durch das Prüfungsmodul 386 des Hintergrundsystems 302 bei einem Empfang einer Tokenanfrage festgestellt werden, ob an dem Abgabepunkt 346 (augenblicklich) ein Abgabevorgang ausgeführt wird, basierend auf dem Abgabepunktdatum der Tokenanfrage. Das Kommunikationsmodul 304 des Hintergrundsystems 302 kann beispielsweise zu bestimmten Zeitpunkten oder zumindest nahezu kontinuierlich über eine Verbindung 309 von dem mindestens einen Abgabepunkt 346 eine Angabe empfangen, ob ein Abgabevorgang an dem Abgabepunkt 346 (augenblicklich) ausgeführt wird (oder nicht).

Wie beschrieben wurde, kann ein lokales Detektionsmodul 372 den Zustand eines Abgabepunkts (z.B. Abgabevorgang wird augenblicklich ausgeführt oder kein Abgabevorgang wird augenblicklich ausgeführt) erfassen. Der (nahezu kontinuierlich) erfasste Zustand kann als Zustandsdatum zyklisch oder nahezu kontinuierlich von dem Abgabepunkt 346 an das Hintergrundsystem 302 übertragen werden.

Das Generieren des eindeutigen Tokens erfolgt insbesondere nur dann, wenn festgestellt wird, dass (augenblicklich) kein Abgabevorgang an dem Abgabepunkt 346 ausgeführt wird. Hiervon wird nachfolgend ausgegangen. Daher wird in vorbeschriebener Weise vorliegend ein Token generiert und eine vorbeschriebene Verknüpfung in dem Verknüpfungsmodul 308 gebildet und in dem Datenspeicher 312 gespeichert.

Insbesondere kann das Kommunikationsmodul 304 unmittelbar nach einer Generierung eines eindeutigen Tokens ein Freigabedatum an den Abgabepunkt 346 über die Verbindung 309 übertragen. Bei einem Empfang des Freigabedatums durch den Abgabepunkt 346, insbesondere durch das Freigabemodul 374 des Abgabepunkts 346, kann das Freigabemodul 374 den Abgabevorgang (in herkömmlicher Weise) freigeben. Elektrische Energie kann an das Fahrzeug übertragen werden.

Ferner erfolgt ein Übertragen eines generierten eindeutigen Tokens in Form eines QRbasierten Tokens 376 über die Verbindung 307 an das mobile Endgerät 362. Wie beschrieben wurde, kann das mobile Endgerät 362 den empfangenen Token abspeichern.

Insbesondere dann, wenn der Ladevorgang beendet wurde, kann über die Verbindung 309 ein durch den Energiemengenzähler 360 gemessenes Energiedatum und/oder ein für die bezogene elektrische Energiemenge zu entrichtendes Gelddatum zusammen mit dem Abgabepunktdatum des Ladepunkts 346 an das Hintergrundsystem 302 übertragen werden bzw. durch das Kommunikationsmodul 304 empfangen werden. Insbesondere kann ein entsprechender Energiedatensatz empfangen werden. Bei Varianten der Anmeldung können die genannten Daten auch kontinuierlich während des Abgabevorgangs erfasst und kontinuierlich bis zum Abschluss des Abgabevorgangs übertragen werden.

Das Ergänzungsmodul 314 kann das empfangene Energiedatum und/oder das empfangene Gelddatum anhand des Abgabepunktdatums der (korrekten) gespeicherten Verknüpfung hinzufügen. Bei Varianten der Anmeldung kann nur das Energiedatum oder nur das Gelddatum übertragen werden. Wenn nur das Energiedatum übertragen wird, kann das Hintergrundsystem eingerichtet sein zum Bestimmen des Gelddatums, basierend auf dem Energiedatum und mindestens einem Tarifdatum (in entsprechender Weise kann ein Abgabepunkt das Gelddatum aus der gemessenen Energiemenge bestimmen).

Ferner kann der Nutzer einen weiteren Vorgang ausführen, wie eine Autowäsche. Das für diesen Vorgang zu entrichtende Gelddatum kann der Verknüpfung ebenfalls hinzugefügt werden. Hierzu kann durch ein (Bezahl-) Terminal 380 das Gelddatum des weiteren Vorgangs sowie vorzugsweise ein Vorgangsinformationsdatum (z.B. "Autowäsche") mit dem auf dem mobilen Endgerät gespeicherten Token verknüpft werden.

Beispielsweise aufgrund einer Nutzeraktion kann der QR-Code basierte Token 376 auf dem Display des mobilen Endgeräts 362 angezeigt und durch das kamerabasierte Lesemodul 382 ausgelesen werden. Der ausgelesene Token und das mindestens eine Vorgangsdatum, wie zum Beispiel das genannte Gelddatum und/oder Vorgangsinformationsdatum, werden zusammen über die Verbindung 313 an das Hintergrundsystem übertragen bzw. von dem Kommunikationsmodul 304 empfangen. Insbesondere wird ein Vorgangsdatensatz empfangen, enthaltend den ausgelesenen Token und das mindestens eine Vorgangsdatum.

Anhand des Tokens kann das Ergänzungsmodul 314 das mindestens eine weitere Vorgangsdatum der (korrekten) gespeicherten Verknüpfung hinzufügen, wie bereits beschrieben wurde.

Ferner kann der Nutzer das mindestens eine Gelddatum, vorzugsweise eine Mehrzahl von Gelddaten, einer gespeicherten Verknüpfung an einer Kassenvorrichtung 366 bezahlen. Beispielsweise kann ein Lesemodul 368 der Kassenvorrichtung 366 für die Initiierung eines Bezahlvorgangs aus dem mobilen Endgerät 362 in vorbeschriebener Weise ein angezeigtes Token 376 auslesen. Über eine Verbindung 317 kann der erfasste Token beispielsweise zusammen mit einer Angabe, dass das mindestens eine Gelddatum der dem Token zugeordneten Verknüpfung bezahlt werden soll, an das Hintergrundsystem 302 übertragen werden bzw. durch das Kommunikationsmodul 304 empfangen werden.

Nach einer Identifizierung der gespeicherten Verknüpfung anhand des eindeutigen Tokens kann das Kommunikationsmodul 304 das mindestens eine Gelddatum der identifizierten Verknüpfung an die Kassenvorrichtung 366 über die Verbindung 317 übertragen. Dann kann das mindestens eine Gelddatum in herkömmlicher Weise bezahlt werden.

Nach einer Detektion einer Bezahlung des mindestens einen Gelddatums kann diese Information durch das Kommunikationsmodul 304 von der Kassenvorrichtung 366 empfangen werden. Ein nicht dargestelltes Kennzeichenmodul des Hintergrundsystems 302 kann den eindeutigen Token als ungültigen Token kennzeichnen, wenn das mindestens eine Gelddatum der für den eindeutigen Token gebildeten Verknüpfung beglichen wurde.

Beispielsweise kann bei Pre-payment / Vorautorisierung ein Abgabepunkt bzw. ein Abgabevorgang sowie die Verknüpfung über das Medium, mit dem die Vorautorisierung durchgeführt wurde, identifiziert und gleichzeitig geschützt werden. Das Medium ist beispielsweise eine App, eine Ladekarte (vgl. Tankkarte) oder ein Bezahlmedium oder eine Identifikations-ID des Nutzers wie sie etwa auf Loyalty-Karten aufgebracht ist. Dieses kann bei weiteren Vorgängen vorgezeigt/ eingelesen werden, um die Verknüpfung zu identifizieren.

### Bezugszeichenliste:

- 100: Energieabgabesystem
- 102: Hintergrundsystem
- 104: Kommunikationsmodul
- 106: Generierungsmodul
- 108: Verknüpfungsmodul
- 110: Speichermodul
- 112: Datenspeicher
- 114: Ergänzungsmodul
- 116: Netzwerk
- 118: Abgabesäule
- 120: Abgabepunkt
- 122: Ausgabevorrichtung
- 124: Initialisierungsmodul
- 126: Abgabepunkt
- 128: Ausgabevorrichtung
- 130: Initialisierungsmodul
- 134: Kommunikationseinheit
- 136: Ablaufsteuerung
- 138: Kraftstoffzähler
- 140: Kraftstoffzähler
- 142: Abgabepunkt
- 144: Ausgabevorrichtung
- 146: Abgabepunkt
- 148: Ausgabevorrichtung
- 150: Initialisierungsmodul
- 152: Initialisierungsmodul
- 154: Kommunikationseinheit
- 156: Ablaufsteuerung
- 158: Energiemengenzähler
- 160: Energiemengenzähler
- 162: mobiles Endgerät
- 164: Energieabgabeanwendung
- 166: Kassenvorrichtung
- 168: Lesemodul
- 170: Detektionsmodul
- 172: Detektionsmodul
- 180: Terminal
- 182: Lesemodul
- 300: Energieabgabesystem
- 301: Verbindung
- 302: Hintergrundsystem
- 303: Verbindung
- 304: Kommunikationsmodul
- 306: Generierungsmodul
- 307: Verbindung
- 308: Verknüpfungsmodul
- 309: Verbindung
- 310: Speichermodul
- 312: Datenspeicher
- 313: Verbindung
- 314: Ergänzungsmodul
- 317: Verbindung
- 318: Ladesäule
- 346: Abgabepunkt
- 348: Ausgabevorrichtung
- 352: Initialisierungsmodul
- 354: Kommunikationseinheit
- 356: Ablaufsteuerung
- 360: Energiemengenzähler
- 362: mobiles Endgerät
- 366: Kassenvorrichtung
- 368: Lesemodul
- 372: Detektionsmodul
- 374: Freigabemodul
- 376: Token
- 380: Terminal
- 382: Lesemodul
- 386: Prüfungsmodul

## Patentansprüche

1. Verfahren zum Betreiben eines Energieabgabesystems (100, 300) zum Abgeben von Energie an Fahrzeuge, wobei das Energieabgabesystem (100, 300) mindestens ein Hintergrundsystem (102, 302) und mindestens einen Abgabepunkt (120, 126, 142, 146, 346) umfasst, eingerichtet zum Abgeben von Energie an ein Fahrzeug, umfassend:
- Empfangen, durch ein Kommunikationsmodul (104, 304) des Hintergrundsystems (102, 302), einer Tokenanfrage von einem mobilen Endgerät (162, 362),
- wobei die Tokenanfrage mindestens ein Abgabepunktdatum eines für einen Abgabevorgang bestimmten Abgabepunkts (120, 126, 142, 146, 346) des Energieabgabesystems (100, 300) enthält,
- Generieren, durch ein Generierungsmodul (106, 306) des Hintergrundsystems (102, 302), eines eindeutigen Tokens bei Empfang der Tokenanfrage,
- Bilden einer Verknüpfung, durch ein Verknüpfungsmodul (108, 308) des Hintergrundsystems (102, 302), zumindest zwischen dem Abgabepunktdatum und dem generierten eindeutigen Token,
- Speichern, durch ein Speichermodul (110, 310), der gebildeten Verknüpfung in einem Datenspeicher (112, 312) des Hintergrundsystems (102, 302), und
- Übertragen, durch das Kommunikationsmodul (104, 304), des generierten eindeutigen Tokens an das mobile Endgerät (162, 362),
- wobei der übertragene eindeutige Token auslesbar auf dem mobilen Endgerät (162, 362) speicherbar ist.

2. Verfahren nach Anspruch 1, **dadurch gekennzeichnet, dass**
- das mindestens eine Abgabepunktdatum eine Abgabepunktkennung des Abgabepunkts (120, 126, 142, 146, 346) und/oder eine Abgabevorgangskennung des Abgabevorgangs ist.

3. Verfahren nach Anspruch 1 oder 2, **dadurch gekennzeichnet, dass**
- der generierte eindeutige Token mindestens ein Zeitdatum enthält, insbesondere ein Ablaufzeitdatum.

4. Verfahren nach einem der vorherigen Ansprüche, **dadurch gekennzeichnet, dass**
- der eindeutige Token aus dem mobilen Endgerät in wenigstens einem der folgenden Formate auslesbar ist:
- als NFC-basierter Token,
- als QR-Code-basierter Token,
- als Barcode-basierter Token, oder
- als Bluetooth-basierter Token.

5. Verfahren nach einem der vorherigen Ansprüche, **dadurch gekennzeichnet, dass** das Verfahren ferner umfasst:
- Empfangen, durch das Kommunikationsmodul (104, 304), des durch ein entfernt von dem Hintergrundsystem (102, 302) angeordnetes Lesemodul (168, 182, 368, 382) des Energieabgabesystems (100, 300) aus dem mobilen Endgerät (162, 362) ausgelesenen eindeutigen Tokens und mindestens eines Vorgangsdatums eines weiteren Vorgangs von dem Lesemodul (168, 182, 368, 382), und
- Hinzufügen, durch ein Ergänzungsmodul des Hintergrundsystems (102, 302), des weiteren Vorgangsdatums zu der gespeicherten Verknüpfung, basierend auf dem empfangenen eindeutigen Token, dem gespeicherten eindeutigen Token und dem empfangenen Vorgangsdatum.

6. Verfahren nach einem der vorherigen Ansprüche, **dadurch gekennzeichnet, dass** das Verfahren ferner umfasst:
- Bereitstellen, durch ein an dem Abgabepunkt (120, 126, 142, 146, 346) angeordnetes Initialisierungsmodul (124, 130, 150, 152, 352) des Energieabgabesystems (100, 300), eines Initialisierungsdatensatzes, enthaltend zumindest das mindestens eine Abgabepunktdatum des Abgabepunkts (120, 126, 142, 146, 346), an dem das Initialisierungsmodul (124, 130, 150, 152, 352) angeordnet ist, und insbesondere ein Kommunikationsdatum zum Ermöglichen eines Übertragens der Tokenanfrage an das Kommunikationsmodul (104, 304).

7. Verfahren nach Anspruch 6, **dadurch gekennzeichnet, dass**
- das Initialisierungsmodul (124, 130, 150, 152, 352) ein passives Initialisierungsmodul (124, 130, 150, 152, 352) ist, insbesondere ein NFC-Modul und/oder ein graphischer Code,
- wobei als Dateninhalt des passiven Initialisierungsmoduls (124, 130, 150, 152, 352) der Initialisierungsdatensatz durch das mobile Endgerät (162, 362) aus dem passiven Initialisierungsmodul (124, 130, 150, 152, 352) auslesbar ist.

8. Verfahren nach einem der vorherigen Ansprüche, **dadurch gekennzeichnet, dass** das Verfahren ferner umfasst:
- Freigeben, durch ein Freigabemodul (374) des Energieabgabesystems (100, 300), eines Abgabevorgangs an dem Abgabepunkt (120, 126, 142, 146, 346) erst nach einem Generieren des eindeutigen Tokens für den Abgabevorgang an dem Abgabepunkt (120, 126, 142, 146, 346).

9. Verfahren nach einem der vorherigen Ansprüche, **dadurch gekennzeichnet, dass** das Verfahren ferner umfasst:
- Feststellen, durch ein Prüfungsmodul (386) des Hintergrundsystems (102, 302), bei einem Empfang einer Tokenanfrage, ob an dem Abgabepunkt (120, 126, 142, 146, 346) ein Abgabevorgang ausgeführt wird, basierend auf dem Abgabepunktdatum der Tokenanfrage, und
- Generieren des eindeutigen Tokens zumindest dann, wenn festgestellt wird, dass kein Abgabevorgang an dem Abgabepunkt (120, 126, 142, 146, 346) ausgeführt wird.

10. Verfahren nach Anspruch 9, **dadurch gekennzeichnet, dass**
- bei einem Feststellen, dass an dem Abgabepunkt (120, 126, 142, 146, 346) ein Abgabevorgang ausgeführt wird, ferner geprüft wird, ob für den Abgabevorgang eine Verknüpfung gespeichert ist, und
- wobei das Generieren des eindeutigen Tokens nur dann erfolgt, wenn festgestellt wird, dass für den Abgabevorgang keine Verknüpfung gespeichert ist.

11. Verfahren nach Anspruch 9 oder 10, **dadurch gekennzeichnet, dass**
- das Kommunikationsmodul des Hintergrundsystems (102, 302) zu bestimmten Zeitpunkten oder zumindest nahezu kontinuierlich von dem mindestens einen Abgabepunkt (120, 126, 142, 146, 346) eine Angabe empfängt, ob ein Abgabevorgang an dem Abgabepunkt (120, 126, 142, 146, 346) ausgeführt wird.

12. Verfahren nach einem der vorherigen Ansprüche, **dadurch gekennzeichnet, dass** das Verfahren ferner umfasst:
- Empfangen, durch das Kommunikationsmodul (104, 304), eines Energiedatums der in dem Abgabevorgang abgegebenen Energie und/oder eines für den Abgabevorgang zu entrichtendes Gelddatums, und
- Hinzufügen, durch das Ergänzungsmodul des Hintergrundsystems, des Energiedatums und/oder des Gelddatums zu der gespeicherten Verknüpfung.

13. Hintergrundsystem (102, 302) für ein Energieabgabesystem (100, 300) zum Abgeben von Energie an Fahrzeuge, umfassend:
- mindestens ein Kommunikationsmodul (104, 304), eingerichtet zum Empfangen einer Tokenanfrage von einem mobilen Endgerät (162, 362),
- wobei die Tokenanfrage zumindest ein Abgabepunktdatum eines für einen Abgabevorgang bestimmten Abgabepunkts (120, 126, 142, 146, 346) des Energieabgabesystems (100, 300) enthält,
- mindestens ein Generierungsmodul (106, 306), eingerichtet zum Generieren eines eindeutigen Tokens bei Empfang der Tokenanfrage,
- mindestens ein Verknüpfungsmodul (108, 308), eingerichtet zum Bilden einer Verknüpfung zumindest zwischen dem Abgabevorgang des Abgabepunkts (120, 126, 142, 146, 346) und dem generierten eindeutigen Token, zumindest basierend auf dem Abgabepunktdatum,
- mindestens ein Speichermodul (110, 310), eingerichtet zum Speichern der gebildeten Verknüpfung in einem Datenspeicher (112, 312) des Hintergrundsystems (102, 302),
- wobei das Kommunikationsmodul (104, 304) eingerichtet ist zum Übertragen des generierten eindeutigen Tokens an das mobile Endgerät (162, 362),
- wobei der übertragene Token auslesbar auf dem mobilen Endgerät (162, 362) speicherbar ist.

14. Energieabgabesystem (100, 300) zum Abgeben von Energie, insbesondere in Form von Kraftstoff und/oder elektrischer Energie, an Fahrzeuge, umfassend:
- ein Hintergrundsystem (102, 302) nach Anspruch 13, und
- mindestens ein Abgabepunkt (120, 126, 142, 146, 346), eingerichtet zum Abgeben der Energie an ein Fahrzeug.

15. Energieabgabesystem (100, 300) nach Anspruch 14, **dadurch gekennzeichnet, dass**
- an dem mindestens einen Abgabepunkt (120, 126, 142, 146, 346) ein Initialisierungsmodul (124, 130, 150, 152, 352) angeordnet ist, eingerichtet zum Bereitstellen eines Initialisierungsdatensatzes, enthaltend zumindest das Abgabepunktdatum des Abgabepunkts (120, 126, 142, 146, 346), an dem das Initialisierungsmodul (124, 130, 150, 152, 352) angeordnet ist, und insbesondere ein Kommunikationsdatum zum Ermöglichen eines Übertragens der Tokenanfrage an das Kommunikationsmodul (104, 304).
